# EUROPEAN PATENT APPLICATION

(11) **EP 4 823 171 A1**
(43) Date of publication of application: **14.10.2026**
(21) Application number: 24911007.3
(22) Date of filing: 23.12.2024
(51) Int. Cl.: H04W 28/06

(54) **SENSING DATA TRANSMISSION METHOD AND APPARATUS**

(30) Priority: 29.12.2023 CN 202311866818
(71) Applicant: Huawei Technologies Co., Ltd., Shenzhen, Guangdong 518129 (CN)
(72) Inventor: XIE, Junwen, Shenzhen, Guangdong 518129 (CN); MA, Mengyao, Shenzhen, Guangdong 518129 (CN); MA, Jianglei, Shenzhen, Guangdong 518129 (CN)
(74) Representative: MERH-IP Matias Erny Reichl Hoffmann Patentanwälte PartG mbB
(86) International application number: PCT/CN2024/141338
(87) International publication number: WO 2025/140079

(57) **Abstract**

This application relates to the field of communication technologies, and in particular, to a sensing data transmission method and an apparatus, to obtain high compression efficiency and reduce a to-be-transmitted data amount of sensing data. The method includes: A first communication apparatus obtains sensing data points of a target object; performs data compression on the sensing data points of the target object, to obtain line cluster information and/or plane information of the target object, where the plane information is determined based on the sensing data point and a neighboring sensing data point corresponding to the sensing data point, and the line cluster information is determined based on a quantity of sensing data points corresponding to a first direction; and sends data to a second communication apparatus, where the data is determined based on the line cluster information and/or the plane information.

## Description

### CROSS-REFERENCE TO RELATED APPLICATIONS

This application claims priority to Chinese Patent Application No. 202311866818.7, filed with the China National Intellectual Property Administration on December 29, 2023 and entitled "SENSING DATA TRANSMISSION METHOD AND APPARATUS", which is incorporated herein by reference in its entirety.

### TECHNICAL FIELD

This application relates to the field of communication technologies, and in particular, to a sensing data transmission method and an apparatus.

### BACKGROUND

With increasingly rich application scenarios of wireless communication, wireless communication may be oriented to more new scenarios, such as sensing, imaging, and environment reconstruction. For example, in the environment reconstruction, a plurality of terminal devices may scan an environment, and send obtained sensing data to a base station. The base station may construct a complete environment map based on the received sensing data.

In a scenario such as the environment reconstruction, transmission of a large amount of sensing data is involved. Therefore, how to compress the sensing data and reduce a to-be-transmitted data amount of the sensing data is a problem worthy of attention.

### SUMMARY

This application provides a sensing data transmission method and an apparatus, to obtain high compression efficiency and reduce a to-be-transmitted data amount of sensing data.

According to a first aspect, this application provides a sensing data transmission method. The method may be performed by a first communication apparatus, and the method includes: obtaining sensing data points of a target object; performing data compression on the sensing data points of the target object, to obtain line cluster information and/or plane information of the target object, where the plane information is determined based on the sensing data point and a neighboring sensing data point corresponding to the sensing data point, the line cluster information is determined based on a sensing data point corresponding to a first direction, and the sensing data point corresponding to the first direction is a sensing data point, in the sensing data points of the target object, other than the sensing data point corresponding to the plane information; and sending data to a second communication apparatus, where the data is determined based on the line cluster information and/or the plane information.

For example, the sent data may include a first field and/or a second field. The first field may include endpoint location information of a line cluster corresponding to the line cluster information, or the endpoint location information of the line cluster and line length information of the line cluster. The second field may include boundary point location information and/or plane parameter information of a plane corresponding to the plane information. Optionally, the endpoint location information of the line cluster may alternatively be replaced with center point location information of the line cluster, or the endpoint location information and the center point location information of the line cluster.

The first direction may be a direction of a normal vector of the sensing data point, a projection direction of the sensing data point, a straight line direction used to determine the line cluster, or the like. That the line cluster information is determined based on the sensing data point corresponding to the first direction may be performing clustering based on normal vectors of the sensing data points to obtain the line cluster information; or performing projection on the sensing data points based on the projection direction, and obtaining, through filtering based on a quantity of sensing data points corresponding to each projection location, sensing data points in the line cluster, to obtain the line cluster information; or obtaining, through filtering based on a quantity of sensing data points on each straight line (or each straight line and an adjacent region of the straight line) corresponding to the straight line direction, the sensing data points in the line cluster, to obtain the line cluster information. For example, the straight line corresponding to the straight line direction may be determined based on points on a two-dimensional plane in a three-dimensional coordinate system and the straight line direction. The points on the two-dimensional plane may be preset, or may be determined based on projection locations of a part or all of the sensing data points of the target object on the two-dimensional plane. This is not limited in this application.

The sensing data points of the target object may include the sensing data point corresponding to the plane information (for example, a sensing data point that belongs to the plane) and the sensing data point corresponding to the line cluster information (for example, a sensing data point that belongs to the line cluster), and may further include another sensing data point, for example, a sensing data point corresponding to point information (for example, a sensing data point that does not belong to the plane or the line cluster). For example, the another sensing data point is the sensing data point corresponding to the point information. If the sensing data points of the target object include the sensing data point corresponding to the plane information, the sensing data point corresponding to the line cluster information, and the sensing data point corresponding to the point information, the sensing data point corresponding to the first direction is the sensing data point, in the sensing data points of the target object, other than the sensing data point corresponding to the plane information, or may be understood as sensing data points, in the sensing data points of the target object, other than the sensing data point corresponding to the plane information and the sensing data point corresponding to the point information.

In this application, the first communication apparatus and the second communication apparatus are different communication apparatuses. Unless otherwise specified, the "first communication apparatus (or second communication apparatus)" in this application may be a terminal device, or may be an internal component (for example, a processor, a chip, or a chip system) of the terminal device, or an apparatus that is used in matching with the terminal device. Because both the terminal device and a network device can perform the foregoing data transmission method, the "first communication apparatus (or the second communication apparatus)" in this application may alternatively be the network device, or may be an internal component (for example, a processor, a chip, or a chip system) of the network device, or an apparatus that is used in matching with the network device.

According to the foregoing method, for the sensing data points of the target object on the plane and/or the line cluster, the sensing data points on the plane and/or the line cluster may be compressed based on a feature of the plane and/or the line cluster, to obtain high compression efficiency, and reduce a to-be-transmitted data amount of sensing data.

In a possible design, the data further includes a third field, the third field includes point information of the target object, and the point information is determined based on a sensing data point, in the sensing data points of the target object, other than the sensing data point corresponding to the line cluster information and/or the sensing data point corresponding to the plane information.

In other words, in this embodiment of this application, if data sent by the second communication apparatus is determined based on three parts: the plane information, the line cluster information, and the point information, the sensing data points of the target object may also be classified into three types (or three parts): the sensing data point corresponding to the plane (or plane information), the sensing data point corresponding to the line cluster (or line cluster information), and another sensing data point other than the sensing data point corresponding to the plane and the sensing data point corresponding to the line cluster (for example, the sensing data point that is not on the plane or the line cluster). Sensing data points other than the sensing data point corresponding to the plane (or plane information) may include the sensing data point corresponding to the line cluster (or line cluster information) and the another sensing data point (for example, the sensing data point that is not on the plane or the line cluster); and the sensing data points other than the sensing data point corresponding to the line cluster (or line cluster information) may include the sensing data point corresponding to the plane (or plane information) and the another sensing data point (for example, the sensing data point that is not on the plane or the line cluster).

Based on the foregoing design, the sensing data points of the target object that are not on the plane and/or the line cluster may be further compressed, and sent to the second communication apparatus, to further improve performance of reconstructing the sensing data points of the target object by the second communication apparatus.

In a possible design, the plane information is determined based on a first threshold and a distance between the sensing data point and the neighboring sensing data point corresponding to the sensing data point; and/or the first direction is the projection direction of the sensing data point, and the line cluster information is determined based on a second threshold and the quantity of sensing data points corresponding to each projection location.

Based on the foregoing design, the sensing data point on the plane and/or the sensing data point in the line cluster may be filtered, and determining of the line cluster information and/or the plane information is supported.

In a possible design, the method further includes: receiving configuration information from the second communication apparatus. The configuration information indicates the first threshold and/or the second threshold.

Based on the foregoing design, this helps the first communication apparatus adjust a compression parameter on the first communication apparatus side based on a requirement on the second communication apparatus side on compression performance of the sensing data, and output compressed data that meets the requirement on the second communication apparatus side.

In a possible design, the configuration information further indicates that the data is determined based on the line cluster information, or is determined based on the plane information, or is determined based on the line cluster information and the plane information.

Based on the foregoing design, the first communication apparatus may send the data based on the requirement on the second communication apparatus side, to avoid compressing an unnecessary sensing data point and sending unnecessary compressed data to the second communication apparatus. This helps reduce signaling and processing resource overheads on the first communication apparatus side.

In a possible design, the method further includes: receiving first indication information from the second communication apparatus. The first indication information indicates a target object set or a non-target object set, and the target object belongs to the target object set.

Based on the foregoing design, the first communication apparatus may perform data compression and sending based on the requirement of the second communication apparatus, to avoid the unnecessary signaling and processing resource overheads.

In a possible design, the method further includes: receiving second indication information from the second communication apparatus. The second indication information indicates one or more of a maximum cut-off height of the target object, a minimum cut-off height of the target object, location information of a non-target line cluster, or location information of a non-target plane. The sensing data point of the target object is a sensing data point that corresponds to and is below the maximum cut-off height of the target object, or the sensing data point of the target object is a sensing data point that corresponds to and is above the minimum cut-off height of the target object. The line cluster corresponding to the line cluster information is a line cluster, of the target object, other than the non-target line cluster, and the plane corresponding to the plane information is a plane, of the target object, other than the non-target plane.

Based on the foregoing design, the sensing data points of the target object obtained by the first communication apparatus or the obtained compressed data may be filtered, to avoid the unnecessary signaling overheads.

In a possible design, performing data compression on the sensing data points of the target object, to obtain the plane information of the target object includes: clustering sensing data points of the target object on the plane, to obtain at least one plane sensing data point cluster, where a distance (for example, a normal vector distance) between each sensing data point on the plane and a neighboring sensing data point corresponding to each sensing data point is less than the first threshold; and determining the plane information based on the at least one plane sensing data point cluster.

It may be understood that the at least one plane sensing data point cluster obtained by clustering the sensing data points of the target object on the plane may be at least one sensing data point cluster obtained by performing point clustering on the sensing data points of the target object on the plane; or may be at least one sensing data point cluster obtained by performing normal vector clustering on the sensing data points of the target object on the plane; or may certainly be at least one sensing data point cluster obtained by first performing point clustering on the sensing data points of the target object on the plane, to obtain at least one sensing data point cluster, and performing normal vector clustering on sensing data points in each obtained sensing data point cluster; or may be at least one sensing data point cluster obtained by first performing normal vector clustering on the sensing data points of the target object on the plane, to obtain at least one sensing data point cluster, and performing point clustering on sensing data points in each obtained sensing data point cluster. A specific manner of clustering the sensing data points of the target object on the plane to obtain the at least one plane sensing data point cluster is not limited in this application.

Based on the foregoing design, the plane information of the target object may be determined based on a feature that distances between sensing data points on a same plane are close.

In a possible design, performing data compression on the sensing data points of the target object, to obtain the line cluster information of the target object includes: determining projection locations of the sensing data points of the target object on a projection plane; for each projection location on the projection plane, when a quantity of sensing data points corresponding to the projection location is greater than the second threshold, determining the sensing data points corresponding to the projection location to be in a projection line cluster; clustering the sensing data points of the target object in the projection line cluster, to obtain at least one projection line cluster sensing data point cluster; and determining the line cluster information based on the at least one projection line cluster sensing data point cluster.

Based on the foregoing design, the line cluster information of the target object may be determined based on a feature that sensing data points on a line that is perpendicular to or approximately perpendicular to the projection plane are aggregated at the projection location on the projection plane.

In a possible design, the method further includes: determining distances between the sensing data points of the target object and the projection plane. For each projection location on the projection plane, when the quantity of sensing data points corresponding to the projection location is greater than the second threshold, determining the sensing data points corresponding to the projection location to be in the projection line cluster includes: for each projection location on the projection plane, when the quantity of sensing data points corresponding to the projection location is greater than the second threshold, and a difference of distances between any two adjacent sensing data points corresponding to the projection location and the projection plane is less than a third threshold, determining the sensing data points corresponding to the projection location to be in the projection line cluster.

Based on the foregoing design, discrete sensing data points can be prevented from being incorrectly determined as the sensing data points on the line, thereby improving accuracy of the data sent to the second communication apparatus, and improving performance of reconstructing the sensing data points on the second communication apparatus side.

In a possible design, the determining the line cluster information based on the at least one projection line cluster includes: determining the line cluster information based on the at least one projection line cluster sensing data point cluster and at least one non-projection line cluster. The at least one non-projection line cluster is determined based on a plurality of endpoints corresponding to the at least one projection line cluster and/or a boundary point.

Based on the foregoing design, sensing data points of the target object not on the line that is perpendicular to or approximately perpendicular to the projection plane can be compressed, thereby further improving the compression performance.

According to a second aspect, an embodiment of this application provides a sensing data transmission method. The method may be performed by a second communication apparatus, and the method includes: receiving data from a first communication apparatus, where the data is determined based on line cluster information and/or plane information of a target object, the plane information is determined based on a sensing data point of the target object and a neighboring sensing data point corresponding to the sensing data point, the line cluster information is determined based on a sensing data point corresponding to a first direction, and the sensing data point corresponding to the first direction is a sensing data point, in sensing data points of the target object, other than the sensing data point corresponding to the plane information; and decompressing the received data to obtain sensing data of the target object.

For example, the received data may include a first field and/or a second field. The first field may include endpoint location information of a line cluster corresponding to the line cluster information, or the endpoint location information of the line cluster and line length information of the line cluster. The second field may include boundary point location information and/or plane parameter information of a plane corresponding to the plane information. Optionally, the endpoint location information of the line cluster may alternatively be replaced with center point location information of the line cluster, or the endpoint location information and the center point location information of the line cluster.

It may be understood that the sensing data (for example, a sensing data point set), of the target object, obtained by the second communication apparatus decompressing the received data is sensing data restored by the second communication apparatus based on the received data in which information about a limited quantity of sensing data points (for example, sensing data points that are used as boundary points of the plane) and an algorithm (for example, a sampling algorithm) are recorded, instead of sensing data (for example, a sensing data point set), of the target object, obtained by the first communication apparatus in a manner such as scanning. Because only the limited quantity of sensing data points are transmitted, air interface overheads between the first communication apparatus and the second communication apparatus can be greatly reduced.

In a possible design, the received data further includes a third field, the third field includes point information of the target object, and the point information is determined based on a sensing data point, in the sensing data points of the target object, other than the sensing data point corresponding to the line cluster information and/or the sensing data point corresponding to the plane information.

In a possible design, the plane information is determined based on a first threshold and a distance between the sensing data point and the neighboring sensing data point corresponding to the sensing data point; and/or the first direction is a projection direction of the sensing data point, and the line cluster information is determined based on a second threshold and a quantity of sensing data points corresponding to each projection location.

In a possible design, the method further includes: sending configuration information to the first communication apparatus. The configuration information indicates the first threshold and/or the second threshold.

In a possible design, the configuration information further indicates that the data is determined based on the line cluster information, or is determined based on the plane information, or is determined based on the line cluster information and the plane information.

In a possible design, the method further includes: sending first indication information to the first communication apparatus. The first indication information indicates a target object set or a non-target object set, and the target object belongs to the target object set.

In a possible design, the method further includes: sending second indication information to the first communication apparatus. The second indication information indicates one or more of a maximum cut-off height of the target object, a minimum cut-off height of the target object, location information of a non-target line cluster, or location information of a non-target plane. The sensing data point of the target object is a sensing data point that corresponds to and is below the maximum cut-off height of the target object, or the sensing data point of the target object is a sensing data point that corresponds to and is above the minimum cut-off height of the target object. The line cluster corresponding to the line cluster information is a line cluster, of the target object, other than the non-target line cluster, and the plane corresponding to the plane information is a plane, of the target object, other than the non-target plane.

According to a third aspect, an embodiment of this application provides a communication apparatus. The apparatus has a function of implementing the method according to the first aspect or the second aspect. The function may be implemented by hardware, or may be implemented by hardware executing corresponding software. The hardware or software includes one or more modules corresponding to the function, for example, includes an interface unit and a processing unit.

In a possible design, the apparatus may be a device, a chip, or an integrated circuit.

In a possible design, the apparatus includes a memory and a processor. The memory is configured to store instructions executed by the processor. When the instructions are executed by the processor, the apparatus may perform the method according to the first aspect or the second aspect.

According to a fourth aspect, an embodiment of this application provides a communication apparatus. The communication apparatus includes an interface circuit and a processor, and the processor and the interface circuit are coupled to each other. The processor is configured to implement the method according to the first aspect or the second aspect by using a logic circuit or executing instructions. The interface circuit is configured to: receive a signal from a communication apparatus other than the communication apparatus and transmit the signal to the processor, or send a signal from the processor to a communication apparatus other than the communication apparatus. It may be understood that, the interface circuit may be a transceiver, a transceiver machine, a transceiver apparatus, or an input/output interface.

Optionally, the communication apparatus may further include a memory, configured to: store instructions executed by the processor, or store input data required for running instructions by the processor, or store data generated after the processor runs the instructions. The memory may be a physically independent unit, or may be coupled to the processor, or the processor includes the memory (that is, the processor and the memory are integrated).

In a possible implementation, the communication apparatus may be a device or a chip.

According to a fifth aspect, an embodiment of this application provides a communication system. The communication system includes a first communication apparatus and a second communication apparatus, the first communication apparatus is configured to implement the method according to the first aspect, and the second communication apparatus is configured to implement the method according to the second aspect.

According to a sixth aspect, an embodiment of this application provides a computer-readable storage medium. The computer-readable storage medium stores a computer program or instructions. When the computer program or the instructions are executed by a processor, the method according to the first aspect or the second aspect may be implemented.

According to a seventh aspect, an embodiment of this application further provides a computer program product, including a computer program or instructions. When the computer program or the instructions are executed by a processor, the method according to the first aspect or the second aspect may be implemented.

According to an eighth aspect, an embodiment of this application further provides a chip system. The chip system includes a processor. The processor is configured to be coupled to a memory. The memory is configured to store a computer program or instructions. When the computer program or the instructions are executed by the processor, the method according to the first aspect or the second aspect may be implemented.

For technical effect that can be achieved in the second aspect to the eighth aspect, refer to the technical effect that can be achieved in the first aspect. Details are not described herein again.

### BRIEF DESCRIPTION OF DRAWINGS

FIG. 1 is a diagram of an architecture of a communication system according to an embodiment of this application;
FIG. 2 is a diagram of an application scenario according to an embodiment of this application;
FIG. 3 is a 2D diagram 1 according to an embodiment of this application;
FIG. 4 is a diagram 1 of a sensing data transmission method according to an embodiment of this application;
FIG. 5 is a diagram of three-dimensional coordinates according to an embodiment of this application;
FIG. 6 is a diagram of binary classification on sensing data points according to an embodiment of this application;
FIG. 7 is a diagram of clustering of sensing data points on a plane according to an embodiment of this application;
FIG. 8 is a diagram of extracting boundary sensing data points according to an embodiment of this application;
FIG. 9 is a diagram of a distribution probability of x values of sensing data points according to an embodiment of this application;
FIG. 10 is a diagram of location information of sensing data points according to an embodiment of this application;
FIG. 11 is a 2D diagram 2 according to an embodiment of this application;
FIG. 12 is a diagram of a projection line cluster range according to an embodiment of this application;
FIG. 13 is a diagram of indexes at two ends of a projection line cluster according to an embodiment of this application;
FIG. 14 is a diagram 2 of a sensing data transmission method according to an embodiment of this application;
FIG. 15 is a diagram of content in compressed data according to an embodiment of this application;
FIG. 16A is a diagram 1 of simulation according to an embodiment of this application;
FIG. 16B is a diagram 2 of simulation according to an embodiment of this application;
FIG. 17 is a diagram 1 of a compression ratio of a compression manner 2 of this application according to an embodiment of this application;
FIG. 18A is a diagram 3 of simulation according to an embodiment of this application;
FIG. 18B is a diagram 4 of simulation according to an embodiment of this application;
FIG. 19 is a diagram 2 of a compression ratio of a compression manner 2 of this application according to an embodiment of this application;
FIG. 20 is a diagram 1 of a structure of a communication apparatus according to an embodiment of this application; and
FIG. 21 is a diagram 2 of a structure of a communication apparatus according to an embodiment of this application.

### DESCRIPTION OF EMBODIMENTS

The technical solutions in embodiments of this application may be applied to various communication systems, for example, a long term evolution (long term evolution, LTE) system, an evolved LTE (LTE-advanced, LTE-A) system, a universal mobile telecommunications system (universal mobile telecommunications system, UMTS), a 5th generation (5th generation, 5G) mobile communication system, a beyond 5G (beyond 5G, B5G) mobile communication system, or a post-5G evolved communication system (for example, a 6G mobile communication system). The communication system may alternatively be a device to device (device-to-device, D2D) network, a Wi-Fi network, a machine to machine (machine to machine, M2M) network, an internet of things (internet of things, IoT) network, or another network.

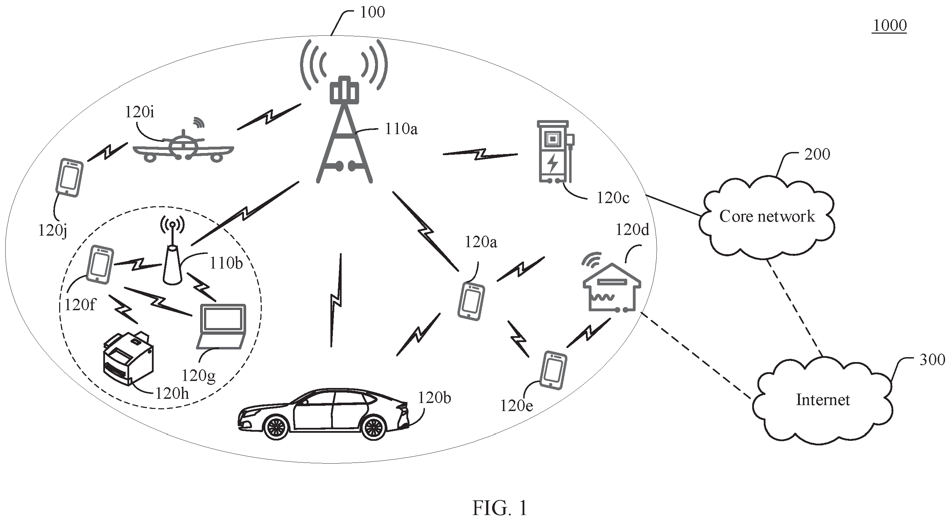

An architecture of a communication system to which embodiments of this application may be applied may be shown in FIG. 1. The communication system 1000 includes a radio access network (radio access network, RAN) 100 and a core network (core network, CN) 200. Optionally, the communication system 1000 may further include an internet 300. The RAN 100 includes at least one network device (for example, 110a and 110b in FIG. 1, which are collectively referred to as 110) and at least one terminal device (for example, 120a to 120j in FIG. 1, which are collectively referred to as 120). The RAN 100 may further include another RAN node, for example, a wireless relay device and/or a wireless backhaul device (not shown in FIG. 1). The terminal device 120 is connected to the network device 110 in a wireless manner. The network device 110 is connected to the core network 200 in a wireless or wired manner. A core network device in the core network 200 and the network device 110 in the RAN 100 may be different physical devices, or may be a same physical device that integrates a logical function of the core network and a logical function of the radio access network.

The RAN 100 may be a cellular system related to the 3rd generation partnership project (3rd generation partnership project, 3GPP), for example, a 4G system, a 5G system, or a post-5G evolved system (for example, a 6G mobile communication system). The RAN 100 may alternatively be an open access network (open RAN, O-RAN or ORAN), a cloud radio access network (cloud radio access network, CRAN), or a Wi-Fi system. The RAN 100 may alternatively be a communication system that integrates the foregoing two or more systems.

An apparatus provided in embodiments of this application may be used in the network device 110 or the terminal device 120. It may be understood that FIG. 1 shows only a possible architecture of the communication system to which embodiments of this application may be applied. In another possible scenario, the architecture of the communication system may alternatively include another device.

The network device 110 is a node in the radio access network (radio access network, RAN), and may also be referred to as an access network device or a RAN node (or device). The network device 110 is configured to help the terminal device implement wireless access. A plurality of network devices 110 in the communication system 1000 may be nodes of a same type, or may be nodes of different types. In some scenarios, roles of the network device 110 and the terminal device 120 are relative. For example, a network element 120i in FIG. 1 may be a helicopter or an uncrewed aerial vehicle, and may be configured as a mobile base station. For a terminal device 120j that accesses the RAN 100 through the network element 120i, the network element 120i is a base station. However, for the base station 110a, the network element 120i is a terminal device. The network device 110 and the terminal device 120 are sometimes referred to as communication apparatuses. For example, network elements 110a and 110b in FIG. 1 may be understood as communication apparatuses having a base station function, and the network elements 120a to 120j may be understood as communication apparatuses having a terminal device function.

In a possible scenario, the network device may be a base station (base station, BS), an evolved base station (evolved NodeB, eNodeB), a transmission reception point (transmitting and receiving point, TRP), a transmission point (transmitting point, TP), a next-generation NodeB (next-generation NodeB, gNB), a base station in a future mobile communication system, a satellite, an access point (access point, AP) in a Wi-Fi system, an integrated access and backhaul (integrated access and backhaul, IAB) node, or a network device that is in a non-terrestrial network (non-terrestrial network, NTN) communication system of a mobile switching center and that may be deployed on a high-altitude platform or a satellite, or the like. The network device may be a macro base station (for example, 110a in FIG. 1), a micro base station or an indoor station (for example, 110b in FIG. 1), a relay node or a donor node, or a radio controller in a CRAN scenario. The network device may alternatively be a device having a base station function in device to device (device to device, D2D) communication, vehicle to everything communication, uncrewed aerial vehicle communication, or machine communication. Optionally, the network device may alternatively be a server, a wearable device, a vehicle, a vehicle-mounted device, or the like. For example, an access network device in a vehicle to everything (vehicle to everything, V2X) technology may be a road side unit (road side unit, RSU).

In another possible scenario, a plurality of network devices collaborate to assist the terminal device in implementing wireless access, and different network devices separately implement a part of functions of the base station. For example, the network device may be a central unit (central unit, CU), a distributed unit (distributed unit, DU), a CU-control plane (control plane, CP), a CU-user plane (user plane, UP), or a radio unit (radio unit, RU). The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the network device may be a CU node, a DU node, or a device including a CU node and a DU node. In addition, the CU may be classified as a network device in an access network RAN, or the CU may be classified as a network device in a core network CN. This is not limited herein.

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

A form of the network device is not limited in embodiments of this application. An apparatus configured to implement a function of the network device may be the network device, or may be an apparatus, for example, a chip system, that can support the network device in implementing the function. The apparatus may be mounted in the network device or used in matching with the network device.

The terminal device 120 may also be referred to as a terminal, user equipment (user equipment, UE), a mobile station (mobile station, MS), a mobile terminal (mobile terminal, MT), or the like, and may be a device configured to provide voice or data connectivity for a user, or may be an Internet of things device, or may be a station (station, STA) in a Wi-Fi system. For example, the terminal device includes a handheld device, a vehicle-mounted device, or the like that has a wireless connection function. Currently, the terminal device may be a mobile phone, a tablet computer, a notebook computer, a palmtop computer, a mobile internet device (mobile internet device, MID), a wearable device (for example, a smart watch, a smart band, a pedometer, or smart glasses), a vehicle-mounted device (for example, a car, a bicycle, an electric vehicle, an airplane, a ship, a train, or a high-speed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self-driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. The terminal device may alternatively be another device having a terminal function. For example, the terminal device may alternatively be a device that functions as a terminal in D2D communication.

A device form of the terminal device is not limited in embodiments of this application. An apparatus for implementing a function of a terminal device may be a terminal device, or may be an apparatus, for example, a chip system, that can support a terminal device to implement the function. The apparatus may be mounted in the terminal device or used in matching with the terminal device. In embodiments of this application, the chip system may include a chip, or may include a chip and another discrete component.

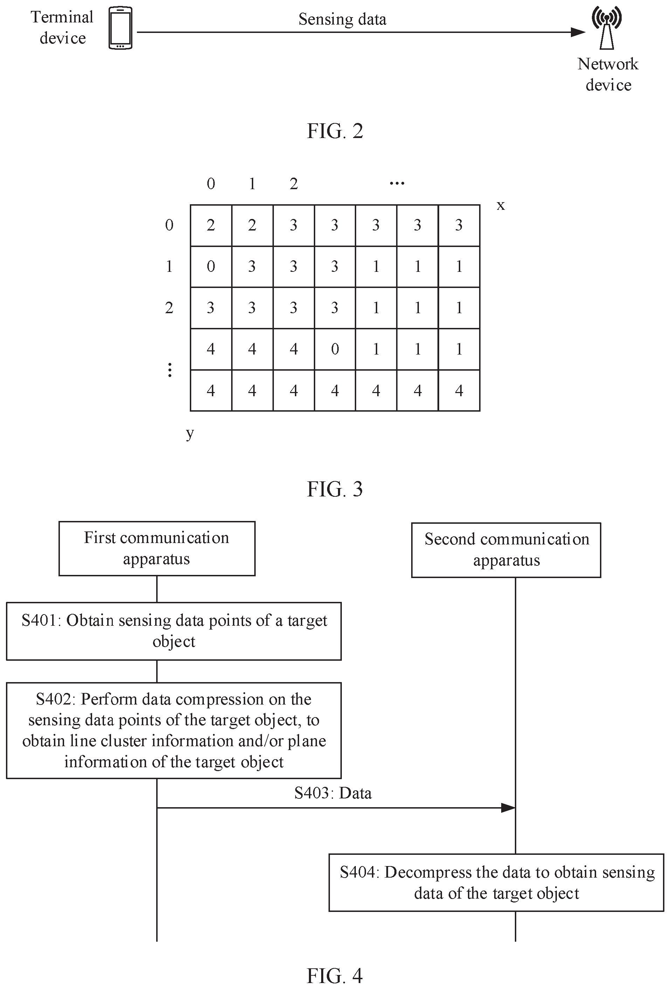

Based on the communication system architecture shown in FIG. 1, FIG. 2 shows an example of an application scenario to which an embodiment of this application is applicable. The application scenario includes a terminal device and a network device. The terminal device (for example, a mobile phone, a computer, a car, or an airplane) may scan an ambient environment via a sensor disposed on the terminal device, to obtain sensing data (which may also be referred to as point cloud data or imaging data), and send the compressed sensing data to the network device. The network device may perform information fusion and environment map construction based on the sensing data reported by the terminal device.

For ease of understanding by a person skilled in the art, the following explains and describes some terms in embodiments of this application.
(1) Sensing data: The sensing data in embodiments of this application may be data obtained by a sensing (or scanning) device (for example, a terminal device or a vehicle-mounted device) by scanning an ambient environment via a sensor (for example, one or more of a visual sensor, an electromagnetic wave sensor (or an antenna), or a millimeter-wave sensor). For example, the sensing data obtained by the sensing device by scanning the ambient environment via the sensor may include a plurality of sensing data points. Each sensing data point may correspond to one point in space, and may include at least one dimension of data obtained by scanning the point. For example, for one or more of three-dimensional coordinates (each-dimensional coordinate may correspond to one-dimensional data), echo signal strength, round-trip time of a sensing signal (for example, an electromagnetic wave signal), and the like of the point, each piece of data may be one-dimensional data included in the sensing data point. In some implementations, the sensing data may also be referred to as a sensing data point (or data point) set, point cloud data, scanning data, environment data, imaging data, or the like.
(2) Two-dimensional (two-dimensional, 2D)-projection based compression solution: In the 2D projection-based compression solution, a projection location may be determined based on two-dimensional data (for example, two-dimensional coordinates) of a sensing data point, and other-dimensional data (for example, third-dimensional coordinates) is used as a padding value of the projection location for compression. For example, three-dimensional coordinates (x, y, z) represented based on an x value (a horizontal coordinate), a y value (a vertical coordinate), and a z value (a vertical coordinate) in a Cartesian coordinate system may be projected to an XOY plane (a horizontal plane in the Cartesian coordinate system), a quantized value of (x, y) may be used as a projection location in a 2D diagram, and a corresponding quantity of z values are padded to each projection location. In addition, a plurality of z values of each projection location may be recorded in sequence, and a z-value sequence including the plurality of z values is compressed based on quantization entropy coding.

Refer to a 2D diagram shown in FIG. 3. Each block in the 2D diagram corresponds to a projection location, a horizontal axis represents a quantized value of an x value (a horizontal coordinate), a vertical axis represents a quantized value of a y value (a vertical coordinate), and a value padded to each block represents a quantity of z values (or a quantity of corresponding sensing data points) corresponding to the projection location represented by the block. A sequence of z values in the 2D diagram corresponding to FIG. 3 may be represented as {z_{1_1,} z_{1_2,} z_{2_1,} z_{2_2,} z_{3_1,} z_{3_2} , z_{3_3} , ...}. Three-dimensional coordinates of one or more sensing data points corresponding to the projection location may be restored based on the quantized value of the x value and the quantized value of the y value that correspond to the projection location, and one or more z values that correspond to the projection location.

However, currently, the 2D projection-based compression solution, a Kd tree (Kd tree) compression solution, and the like are compression designed based on each sensing data point in sensing data, and geometric semantic information of the sensing data is not considered. Therefore, compression efficiency is not high. In view of this, this application provides a sensing data transmission method and an apparatus, to compress sensing data based on a geometric semantic feature of the sensing data, to obtain high compression efficiency and reduce a to-be-transmitted data amount of the sensing data. The following describes in detail embodiments of this application with reference to accompanying drawings.

In addition, it should be understood that ordinal numbers such as "first" and "second" mentioned in embodiments of this application are used to distinguish between a plurality of objects, and are not intended to limit sizes, content, a sequence, a time sequence, priorities, importance, or the like of the plurality of objects. For example, a first communication apparatus and a second communication apparatus do not mean different priorities, importance degrees, or the like corresponding to the two communication apparatuses.

In embodiments of this application, unless otherwise specified, a quantity of nouns represents "a singular noun or a plural noun", that is, "one or more". "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B. "At least one of the following items (pieces)" or a similar expression thereof means any combination of these items, including any combination of singular items (pieces) or plural items (pieces). For example, at least one item (piece) of a, b, or c represents: a, b, c, a and b, a and c, b and c, or a, b, and c. Herein, a, b, and c may be singular or plural.

The sensing data transmission method provided in embodiments of this application may be performed by the first communication apparatus and the second communication apparatus. The first communication apparatus and the second communication apparatus are different communication apparatuses. The first communication apparatus (or the second communication apparatus) may be a terminal device, a component (for example, a processor, a chip, or a chip system) of the terminal device, or an apparatus that is used in matching with the terminal device, or may be a network device, a component (for example, a processor, a chip, or a chip system) of the network device, or an apparatus that is used in matching with the network device. The first communication apparatus may be used as a transmit end of the sensing data to compress the sensing data, and the second communication apparatus may be used as a receive end to decompress and restore the sensing data.

For example, the first communication apparatus may be the terminal device, and the second communication apparatus may be the network device. The terminal device may obtain the sensing data, compress the sensing data, and send the compressed sensing data to the network device. The network device may decompress and restore the sensing data.

FIG. 4 is a diagram 1 of a sensing data transmission method according to an embodiment of this application. The method includes the following steps.

S401: A first communication apparatus obtains sensing data points of a target object.

In this embodiment of this application, the first communication apparatus may be used as a sensing device or a scanning device to scan the target object to obtain sensing data; or the first communication apparatus may obtain the sensing data from another communication apparatus. This is not limited in this application. It may be understood that there may be one or more target objects. The sensing data of the target object may be a sensing data point (which may also be referred to as data point) set of the target object. Obtaining the sensing data of the target object may also be referred to as obtaining the sensing data points of the target object. Each sensing data point may correspond to one point of the target object, and may include at least one dimension of data obtained by scanning the point. For example, three-dimensional (three-dimensional, 3D) coordinates (each-dimensional coordinate may correspond to one-dimensional data) of the point may further include one or more of echo signal strength, round-trip time of a sensing signal (for example, an electromagnetic wave signal), and the like.

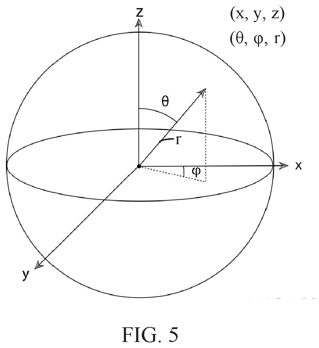

Refer to a diagram of three-dimensional coordinates shown in FIG. 5. The three-dimensional coordinates recorded by the sensing data point may be spherical coordinates (θ, φ, r), in a spherical coordinate system, represented by a vertical angle θ (which may also be referred to as a pitch angle), a horizontal angle φ (which may also be referred to as a yaw angle), and a distance r from the point to an origin; or may be Cartesian coordinates (x, y, z), in a Cartesian coordinate system, represented by an x value (a horizontal coordinate), a y value (a vertical coordinate), and a z value (a vertical coordinate); or may certainly be three-dimensional coordinates in another three-dimensional coordinate system (for example, a cylindrical coordinate system). A specific form of the three-dimensional coordinates is not limited in this application. It may be understood that three-dimensional coordinates in different coordinate systems may be mutually converted.

For example, a mapping algorithm from the Cartesian coordinate system to the spherical coordinate system may satisfy the following formula: $θ = arcsin \left(z/\sqrt{{x}^{2} + {y}^{2} + {z}^{2}}\right) , φ = arccos \left(x/\sqrt{{x}^{2} + {y}^{2}}\right) , and r = \sqrt{{x}^{2} + {y}^{2} + {z}^{2}} .$

S402: The first communication apparatus performs data compression on the sensing data points of the target object, to obtain line cluster information and/or plane information of the target object.

The plane information is determined based on the sensing data point and a neighboring sensing data point corresponding to the sensing data point, the line cluster information is determined based on a sensing data point corresponding to a first direction, and the sensing data point corresponding to the first direction is a sensing data point, in the sensing data points of the target object, other than the sensing data point corresponding to the plane information.

The sensing data points of the target object may include the sensing data point corresponding to the plane information (for example, a sensing data point that belongs to the plane) and the sensing data point corresponding to the line cluster information (for example, a sensing data point that belongs to the line cluster), and may further include another sensing data point, for example, a sensing data point corresponding to point information (for example, a sensing data point that does not belong to the plane or the line cluster). For example, the another sensing data point is the sensing data point corresponding to the point information. If the sensing data points of the target object include the sensing data point corresponding to the plane information, the sensing data point corresponding to the line cluster information, and the sensing data point corresponding to the point information, the sensing data point corresponding to the first direction is the sensing data point, in the sensing data points of the target object, other than the sensing data point corresponding to the plane information, or may be understood as sensing data points, in the sensing data points of the target object, other than the sensing data point corresponding to the plane information and the sensing data point corresponding to the point information.

In addition, it may be understood that, when the first communication apparatus performs data compression on the sensing data points of the target object, and does not obtain the plane information of the target object (or does not perform data compression on sensing data points on the plane, to obtain the plane information), sensing data points corresponding to the first direction may either not exclude, or exclude the sensing data point corresponding to the plane information. When a data compression manner of the line cluster information is determined by excluding the sensing data point corresponding to the plane information regardless of whether the plane information of the target object is obtained, regardless of whether the first communication apparatus performs data compression on the sensing data points of the target object to obtain the plane information of the target object, the sensing data point corresponding to the first direction may be the sensing data point, in the sensing data points of the target object, other than the sensing data point corresponding to the plane information.

For example, the first direction may be a direction of a normal vector of the sensing data point, a straight line direction used to determine the line cluster, or a projection direction of the sensing data point; or clustering is performed based on normal vectors of the sensing data points to obtain the line cluster information; or sensing data points in the line cluster are obtained through filtering based on a quantity of sensing data points on each straight line corresponding to the straight line direction, to obtain the line cluster information; or projection is performed on the sensing data points based on the projection direction, and the sensing data points in the line cluster are obtained through filtering based on a quantity of sensing data points corresponding to each projection location, to obtain the line cluster information.

An outer plane of an object (for example, a house or a bridge) usually presents a specific geometric structure (for example, a plane or a line), and three-dimensional coordinate distribution of sensing data points obtained by scanning the object usually also complies with three-dimensional coordinate distribution of a plurality of points of the specific geometric structure. Therefore, in this embodiment of this application, it may be considered that geometric structure semantics of the sensing data points of the target object is recognized, and the sensing data points are compressed based on a geometric structure semantic feature. The geometric structure semantics may refer to a type of a geometric structure, for example, a plane (such as a flat plane or a curved plane) or a line. The geometric structure semantic feature may refer to a distribution feature of sensing data points of the geometric structure. For example, normal vectors corresponding to sensing data points on a same plane are usually the same, and normal vectors of adjacent sensing data points on a same plane are usually similar.

For example, for the recognized geometric structure, the first communication apparatus may recognize a plane corresponding to the sensing data points of the target object, and determine compressed data based on plane information of the plane. The plane information of the plane may include key sensing data point location information and/or plane parameter information of the plane. The plane parameter information may be a normal vector of the plane, an expression (for example, an equation) corresponding to the plane, or the like. Key sensing data points of the plane may be sensing data points that can reflect a region corresponding to the plane in space (or a coordinate system), and may be boundary sensing data points (that is, boundary points) of the plane, a part of sensing data points obtained by sampling the sensing data points on the plane, or the like. The key sensing data point location information may be three-dimensional coordinates of the key sensing data points; two-dimensional coordinates corresponding to projection locations of the key sensing data points on the projection plane, and distances between the key sensing data points and the projection plane; information about a two-dimensional coordinate system constructed based on the plane on which the key sensing data points are located, and coordinates of the key sensing data points in the two-dimensional coordinate system; or the like. For example, the recognized geometric structure includes a line cluster (or a line). The first communication apparatus may recognize the line cluster corresponding to the sensing data points of the target object, and determine compressed data based on the line cluster information of the line cluster. The line cluster information may include a key sensing data point location information of the line cluster, or the key sensing data point location information of the line cluster and line length information, or the like. Key sensing data points of the line cluster may be sensing data points that can reflect a region corresponding to the line cluster in space (or a coordinate system), and may be boundary sensing data points corresponding to a line cluster endpoint (or an endpoint of one or more lines in the line cluster), sensing data points corresponding to a line cluster center point, a part of sensing data points obtained by performing sampling on the sensing data points in the line cluster, and the like. The key sensing data point location information may be three-dimensional coordinates of the key sensing data points, two-dimensional coordinates corresponding to projection locations of the key sensing data points on the projection plane, three-dimensional region information of distribution of the key sensing data points, two-dimensional projection region information of the key sensing data points on the projection plane, and the like. The line length information may be a maximum value and a minimum value of distances between the sensing data points in the line cluster and the projection plane, and the like.

It may be understood that the line cluster information may include the following cases: (1) After line clusters are clustered, each projection point in each cluster may send endpoint location information and/or line length information. (2) After the line clusters are clustered, each cluster sends only a minimum surrounding region (for example, one endpoint+radius r) and/or line length information in the clustering. (3) After the line clusters are clustered, the manner (1) is used for a part of clusters, and the manner (2) is used for a part of clusters. Whether the manner (1) or the manner (2) is used may be distinguished based on a feature such as a quantity, density, or region distribution of projection points in the clustering. For example, if the density is less than a density threshold, the manner (1) is used, or if the density is greater than or equal to the density threshold, the manner (2) is used.

In some implementations, the second communication apparatus may alternatively send indication information to indicate which manner the first communication apparatus selects from the foregoing three manners. The first communication apparatus may further report that line cluster information corresponding to each line cluster is determined in the manner (1) or the manner (2), and may further report a region parameter (for example, a quantity, density, or a distribution status of sensing data points) corresponding to each line cluster, to control a sampling granularity of decompression (or data restoration) on a second communication apparatus side.

In a possible implementation, the first communication apparatus may recognize (or extract) a plane corresponding to the sensing data points of the target object based on a distance between the sensing data point and a neighboring sensing data point of the sensing data point, to obtain the plane information of the target object.

For example, the first communication apparatus may perform binary classification on the sensing data points of the target object based on a distance between each sensing data point of the target object and a neighboring sensing data point of the sensing data point. A sensing data point whose corresponding distance is a less than a first threshold belongs to the sensing data points on the plane, and a sensing data point whose corresponding distance is greater than or equal to the first threshold does not belong to the sensing data points on the plane. In addition, the sensing data points on the plane to which the target object belongs may be clustered, to obtain at least one plane sensing data point cluster. Each plane sensing data point cluster corresponds to one plane, and plane information of a plane corresponding to the plane sensing data point clustering may be determined based on each plane sensing data point cluster. For example, for a plane 1, an edge recognition algorithm (for example, a concave detection algorithm) may be used to recognize boundary sensing data points on the plane 1 in plane sensing data point cluster 1 corresponding to the plane 1, to determine plane information (for example, location information of the boundary sensing data points) of the plane 1.

Because normal vectors of sensing data points on a same plane are usually the same or similar, to improve accuracy of the obtained plane information of the target object, in some implementations, binary classification may be further performed on the sensing data points of the target object based on a distance between a normal vector of each sensing data point of the target object and a normal vector of a neighboring sensing data point of the sensing data point, and clustering may be performed on the sensing data points, of the target object, belonging to the plane, to obtain the at least one plane sensing data point cluster. It may be understood that the normal vector of the sensing data point may be determined based on a normal vector of a plane obtained by fitting a plurality of sensing data points that use the sensing data point as a center.

It may be understood that the at least one plane sensing data point cluster obtained by clustering the sensing data points, of the target object, belonging to (or on) the plane may be at least one sensing data point cluster obtained by performing point clustering on the sensing data points, of the target object, belonging to the plane; or may be at least one sensing data point cluster obtained by performing normal vector clustering on the sensing data points, of the target object, belonging to the plane; or may certainly be at least one sensing data point cluster obtained by first performing point clustering on the sensing data points, of the target object, belonging to the plane, to obtain at least one sensing data point cluster, and performing normal vector clustering on sensing data points in each obtained sensing data point cluster; or may be at least one sensing data point cluster obtained by first performing normal vector clustering on the sensing data points, of the target object, belonging to the plane, to obtain at least one sensing data point cluster, and performing point clustering on sensing data points in each obtained sensing data point cluster. A specific manner of clustering the sensing data points, of the target object, belonging to the plane, to obtain the at least one plane sensing data point cluster is not limited in this application.

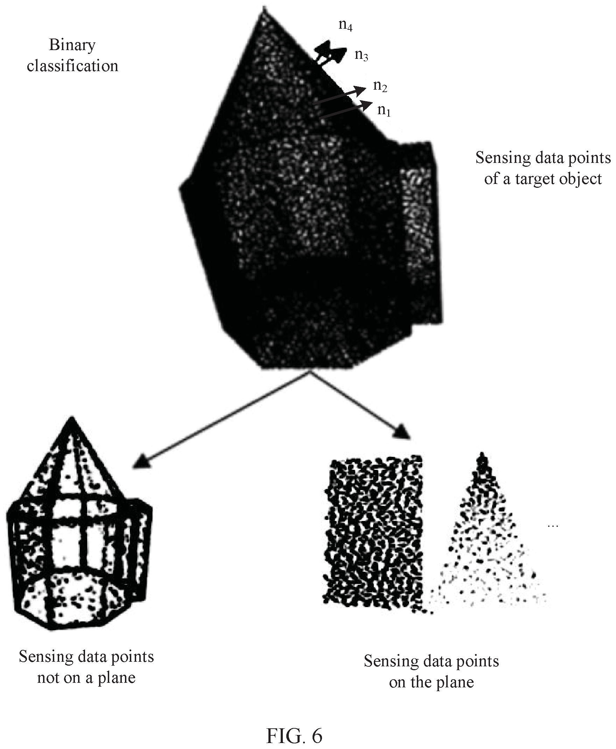

In an example, refer to a diagram of binary classification on sensing data points of a target object shown in FIG. 6. The first communication apparatus may separate, based on a normal vector distance *d*ᵢ between each sensing data point of the target object and a neighboring sensing data point of the sensing data point, a sensing data point on a plane and a sensing data point that does not belong to the plane, where ${d}_{i} = \frac{1}{N} {\sum }_{j} \left‖{n}_{i}-nj\right‖ , \left\{\begin{matrix}{d}_{i} < Th , i ∈ plane \\ {d}_{i} \geq Th , i ∉ plane\end{matrix}\right.$, i is a sensing data point index of the target object, *j* is an index of N neighboring sensing data points of the sensing data point whose index is i, *N* is an integer greater than or equal to 1, and *Th* is the first threshold.

It may be understood that the plane may be a flat plane and/or a curved plane. Because the normal vectors corresponding to the sensing data points on the same plane are usually the same, and normal vectors of adjacent sensing data points on a same curved plane are usually similar, when the plane includes only the flat plane, a value of *Th* may be *Th*₁; and when the plane includes the flat plane and the curved plane, the value of *Th* may be *Th*₂, where *Th*₂ is greater than *Th*₁. When the plane includes only the curved plane, the foregoing formula may be further evolved to ${d}_{i} = \frac{1}{N} {\sum }_{j} \left‖{n}_{i}-nj\right‖ ,$, where $\left\{\begin{matrix}{Th}_{1} < {d}_{i} < {Th}_{2} , i ∈ plane \\ {d}_{i} \geq {Th}_{1} or {d}_{i} \geq {Th}_{2} , i ∉ plane\end{matrix}\right.$, and *Th*₁ and/or *Th*₂ may be determined based on a normal vector distance distribution range of adjacent sensing data points that need to be filtered and that are on the curved plane.

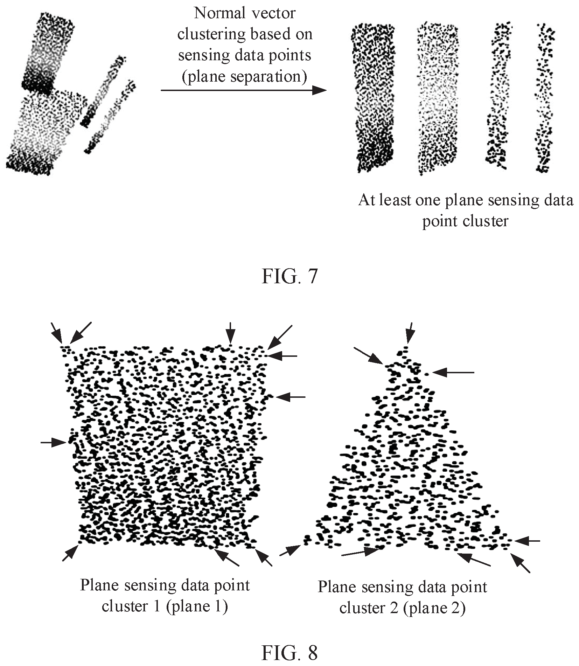

Refer to FIG. 7. For sensing data points on a plane, the first communication apparatus may perform normal vector clustering on the sensing data points on the plane to obtain at least one plane sensing data point cluster. Normal vectors of sensing data points in any plane sensing data point cluster are the same or similar, and each plane sensing data point cluster corresponds to one plane. Refer to FIG. 8. By extracting boundary sensing data points (indicated by arrows in FIG. 8) in each obtained plane sensing data point cluster (for example, plane sensing data point cluster 1 and plane sensing data point cluster 2 in FIG. 8), the first communication apparatus may obtain plane information (for example, three-dimensional coordinates of the boundary sensing data points on the plane) of planes (for example, a plane 1 and a plane 2) corresponding to the plane sensing data point clustering (for example, the plane sensing data point cluster 1 and the plane sensing data point cluster 2 in FIG. 8).

In another possible implementation, the first communication apparatus may further recognize (or extract) the plane (for example, the flat plane) corresponding to the sensing data points of the target object based on a distribution probability and a distribution probability threshold of at least one dimension of data (for example, one or more of an x value, a y value, or a z value) of the sensing data points of the target object, to obtain the plane information of the target object.

For example, the first communication apparatus may select, based on the distribution probability of the x value (or the y value or the z value) of the sensing data points of the target object, at least one segment of consecutive x values (or y values or z values) with a large distribution probability, to obtain the at least one plane sensing data point cluster (that is, obtain at least one plane sensing data point set), and obtain the plane information of the target object based on the at least one obtained plane sensing data point cluster.

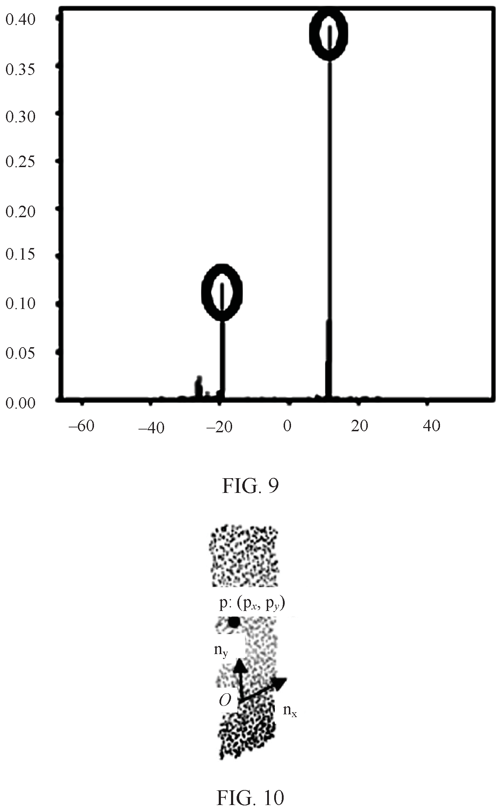

Refer to a diagram of a distribution probability of x values of sensing data points shown in FIG. 9. A horizontal axis in FIG. 9 represents an x value (that is, a horizontal coordinate) of a sensing data point of a target object, and a vertical axis represents a distribution probability (or a proportion) of the sensing data point. It can be learned from FIG. 9 that x values whose distribution probability of the sensing data points are greater than the distribution probability threshold (for example, the distribution probability threshold is 0.05) are: -19 and 12, and it may be determined that x value distribution ranges [-19.25, -18.75] and [11.75, 12.25] respectively corresponding to -19 and 12 correspond to a plane. The first communication apparatus may extract sensing data points of the target object whose x values are in [-19.25, -18.75], to obtain a sensing data point set 1 (that is, plane sensing data point cluster 1) of the x values corresponding to [-19.25, -18.75], and a sensing data point set 2 (that is, plane sensing data point cluster 2) of x values corresponding to [11.75, 12.25]. By extracting boundary sensing data points in each obtained plane sensing data point set, the first communication apparatus may obtain the plane information of the plane 1 and the plane 2 corresponding to the sensing data point set 1 and the sensing data point set 2.

In this embodiment of this application, the plane information may include location information of boundary sensing data points of M planes of the target object, where M is an integer greater than or equal to 1. For example, each plane corresponds to n boundary sensing points, the location information of the boundary sensing data points is three-dimensional coordinates of the boundary sensing data points, and three-dimensional coordinates of the n boundary sensing data points are sorted clockwise or counterclockwise. The three-dimensional coordinates of the n boundary sensing data points corresponding to each plane may be represented in a three-dimensional form, or may be represented in a two-dimensional form in which an origin corresponding to the plane and a direction vector of two coordinate axes corresponding to the plane are used, and the n boundary sensing points corresponding to the plane respectively correspond to two-dimensional coordinates of location information of the two coordinate axes. Examples are as follows.

Manner 1: A three-dimensional form is {(*x*₁, *x*₂, ... , *xₙ*), (*y*₁, *y*₂, ... , , *yₙ*), (*z*₁, *z*₂, ... , *zₙ*)}, where n represents a quantity of boundary sensing points, (*x*₁, *x*₂, ... , *xₙ*) represents x values (horizontal coordinates) of the n boundary sensing data points, (*y*₁, *y*₂, ... , *yₙ*) represents y values (vertical coordinates) of the n boundary sensing data points, (*z*₁, *z*₂, ... , *zₙ*) represents z values (vertical coordinates) of the n boundary sensing data points, and entropy coding may be separately performed on each-dimensional data of three-dimensional data of the n boundary sensing data points, or entropy coding may be performed on the whole three-dimensional data. This is not limited in this application.

Manner 2: Refer to FIG. 10 for a two-dimensional form. For any plane, any point in plane sensing data point clustering may be extracted as an origin O, and a direction vector (*nₓ*, *n_{y}*) of two coordinate axes on the plane is determined. Three-dimensional coordinates (x, y, z) of n boundary sensing data points corresponding to the plane may be transformed into two-dimensional coordinates (*pₓ*, *p_{y}*) on the plane based on three-dimensional coordinates of the origin O and the direction vector (*nₓ, n_{y}*) of the two coordinate axes. In this case, location information of boundary sensing data points of the plane may be represented as {(*xₒ*, *yₒ*, *zₒ*), (*nₓ*, *n_{y}*), (*p*_{*x*1}, *p*_{*x*2}, ... ), (*p*_{*y*1}, *p*_{*y*2}, ... )}, where ( *xₒ*, *yₒ*, *zₒ*) represents the three-dimensional coordinates of the origin corresponding to the plane, (*nₓ*, *n_{y}*) represents the direction vector of the two coordinate axes corresponding to the plane, and (*p*_{*x*1}, *p*_{*x*2}, ... ), (*p*_{*y*1}, *p*_{*y*2}, ... ) represents locations (or coordinates) of the n boundary sensing data points, corresponding to the plane, in a two-dimensional coordinate system constructed based on the origin and the two coordinate axes.

It may be understood that the plane information may include the location information, of the boundary sensing data points, corresponding to the M planes. The location information, of the boundary sensing data points, corresponding to the M planes may be sequentially arranged, and the plane information may further include quantities (*a*₁, *a*₂, ... , *aₘ*) of boundary sensing data points respectively corresponding to the M planes, which is used as a separator or a separation basis for the location information of the boundary sensing data points of the M planes.

In some implementations, when a quantity of boundary sensing data points corresponding to the plane is small (for example, when the quantity of boundary sensing data points is less than or equal to a specified quantity threshold), the location information of the boundary sensing data points may be represented in a three-dimensional form or a two-dimensional form. When the quantity of boundary sensing data points corresponding to the plane is large (for example, when the quantity of boundary sensing data points is greater than the specified quantity threshold), the location information of the boundary sensing data points may be represented in the two-dimensional form, to obtain a high compression gain.

In a possible implementation, the first direction may be the projection direction or the straight line direction. The first communication apparatus may recognize (or extract) the line cluster corresponding to the sensing data points of the target object based on a quantity of sensing data points of the target object at each projection location (or straight line), to obtain the line cluster information of the target object. The line cluster may be understood as a set of lines (or line segments), and the line cluster may correspond to one or more lines (or line segments).

For example, the first communication apparatus may project sensing data points not on the plane of the target object based on a projection plane (for example, a horizontal plane (that is, an XOY plane) of the Cartesian coordinate system), and may count the quantity of sensing data points corresponding to each projection location. Each projection location may correspond to one straight line. For example, the straight line corresponding to each projection location is a straight line that passes through the projection location and is perpendicular to the projection plane. For any projection location, if a quantity of sensing data points corresponding to the projection location is greater than a second threshold, it may be determined that the sensing data points corresponding to the projection location are in a projection line cluster. At least one projection line cluster sensing data point cluster may be obtained by clustering (for example, performing distance-based clustering) the sensing data points of the target object in the projection line cluster. Each projection line cluster sensing data point cluster corresponds to one projection line cluster. Based on the projection line cluster clustering corresponding to the projection line cluster, the first communication apparatus may determine the line cluster information of the projection line cluster.

To avoid determining discrete sensing data points as sensing data on the line by mistake, in some implementations, for any projection location, when a quantity of sensing data points corresponding to the projection location is greater than the second threshold, and a difference of distances between any two adjacent sensing data points corresponding to the projection location and the projection plane is less than a third threshold, the sensing data points corresponding to the projection location are determined to be in the projection line cluster.

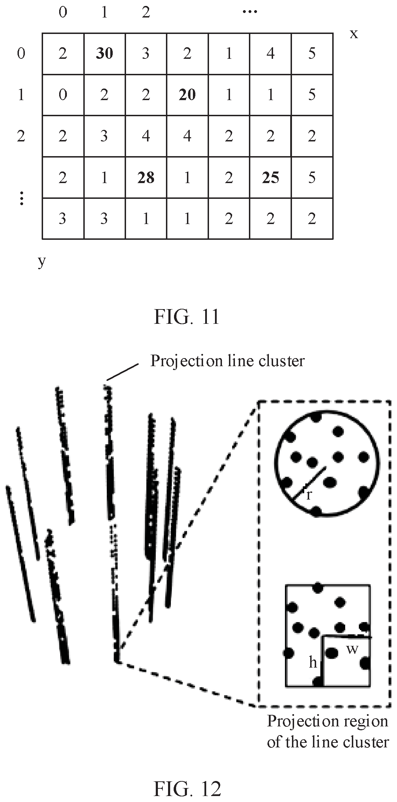

For example, the projection plane is the horizontal plane (that is, the XOY plane) of the Cartesian coordinate system. Three-dimensional coordinates (x, y, z) of the sensing data points not on the plane of the target object may be quantized. For any sensing data point, quantized (x, y) of the sensing data point is a projection location on the projection plane, and quantized z after is a distance between the sensing data point and the projection plane. Refer to a 2D diagram shown in FIG. 11. Each block in the 2D diagram corresponds to a projection location, a horizontal axis represents a quantized value of an x value (a horizontal coordinate), a vertical axis represents a quantized value of a y value (a vertical coordinate), and a value padded to each block represents a quantity of z values corresponding to a sensing data point represented by the block (or a quantity of corresponding sensing data points). The first communication apparatus may determine, based on a quantity *c*ᵢ of z values corresponding to each projection location, a second threshold *T*₂, and a third threshold *T*₃ , the sensing data points on the projection line, where $\left\{\begin{matrix}\left({c}_{{}_{i}}>{T}_{2}\right) & \left(\left‖zj-zk\right‖<{T}_{3}\right) , i ∈ projection line cluster \\ other , i ∉ projection line cluster\end{matrix}\right.$, *i* is an index of the projection location (that is, (x, y)), and *zj* and *zk* are z values of any two adjacent sensing data points corresponding to a projection location *i*.

Refer to FIG. 12. For the sensing data points in the projection line cluster, the first communication apparatus may cluster, based on the projection locations of the sensing data points, the sensing data points in the projection line cluster, to obtain the at least one projection line cluster sensing data point cluster. Each projection line cluster corresponds to one projection line cluster sensing data point cluster. Line cluster information of each projection line cluster may be determined based on the projection line cluster sensing data point clustering corresponding to the projection line cluster. For example, key sensing data point location information of the projection line cluster may be determined based on two-dimensional coordinates of one or more sensing data points that are of corresponding projection line cluster sensing data point clustering and that are on the projection plane, or may be determined based on region information, for example, two-dimensional coordinates of a center point on the projection plane, and a radius (for example, r in FIG. 12) of a minimum surrounding circle of a projection region or length and width information (for example, h and w in FIG. 12) of a minimum bounding box of the projection region, of a part or all of sensing data points that are of the corresponding projection line cluster sensing data point clustering and that are on the projection plane. The line length information may be determined based on a range, for example, a maximum value and a minimum value corresponding to third-dimensional coordinates (z), of the third-dimensional coordinates corresponding to corresponding projection line cluster sensing data point clustering.

It should be noted that, in addition to a circle or a rectangle, the projection region may also be in a form of a line segment or the like, and the representation of the projection region is merely an example. In addition, during restoration of the line cluster endpoint, a location of the line cluster endpoint may be restored for a sampling point in the projection region, and a location of an endpoint may be further restored for a sampling point at a boundary of the region.

In some implementations, it is considered that the target object has a contour line that is not perpendicular or not approximately perpendicular to the projection plane. At least one non-projection line cluster may be further determined based on a plurality of key sensing data points (for example, sensing data points located at the line cluster endpoint) corresponding to at least one projection line cluster, to obtain line cluster information of the non-projection line cluster.

In an example, for each projection line cluster, the first communication apparatus may determine, based on two end values of distance distribution from a sensing data point corresponding to the projection line cluster to the projection plane, endpoints corresponding to the two end values of the projection cluster. An upper endpoint may be determined based on at least one group of two-dimensional coordinates (for example, x and y) projected by the projection line cluster on the projection plane and a maximum distance (for example, *zₘₐₓ* ) between the projection plane and the sensing data point corresponding to the projection line cluster. A lower endpoint may be determined based on at least one group of two-dimensional coordinates (for example, x and y) of the projection line cluster on the projection plane and a minimum distance (for example, *zₘᵢₙ*) between the projection plane and the sensing data point corresponding to the projection line cluster.

For upper end points and lower end points of a plurality of projection line clusters, the first communication apparatus may connect the upper end points of the plurality of projection line clusters in pairs, and connect the lower end points of the plurality of projection line clusters in pairs, to obtain a plurality of predicted non-projection line clusters.

In addition, it may be understood that, boundary points (or contour boundary points) of the target object may also be used to predict a non-projection line cluster. For example, the boundary points (that is, boundary sensing data points) in the sensing data points of the target object may be recognized according to a concave detection algorithm or the like; or in a direction perpendicular to the projection plane, planes in which a plurality of projection distance values are located may be divided based on different projection distance values, and boundary points, in the sensing data points, falling on the planes are recognized; or planes may be divided by using the plurality of upper and lower endpoint values of the projection line cluster as projection distance values, and boundary points, in the sensing data points, falling on the planes are recognized; or the like. When the boundary points of the target object are determined, one or more of the foregoing determining manners may be used to determine the boundary points of the target object, or another manner may be used to determine the boundary points of the target object. This is not limited in this application. The predicted non-projection line cluster may also be obtained by connecting the boundary points in pairs.

For any predicted non-projection line cluster, W sampling points may be obtained through sampling (for example, even sampling) in the predicted non-projection line cluster, and neighboring sensing data points of the W sampling points are determined from the sensing data points of the target object. When an average distance *L*ᵢ between the W sampling points and the neighboring sensing data points of the W sampling points is less than a fourth threshold *T*₄, it is determined that the non-projection line cluster exists. When the non-projection line cluster exists, line cluster information of the non-projection line cluster may be determined based on endpoint information of the non-projection line cluster. $\left\{\begin{matrix}{L}_{i} < {T}_{4} , i ∈ non - projection line cluster \\ {L}_{i} \geq {T}_{4} , i ∉ non - projection line cluster\end{matrix}\right.$

In addition, it may be understood that an endpoint of the non-projection line cluster may be further fine-tuned. For example, after the non-projection line cluster is predicted, all neighboring sensing data points of sensing data points in the non-projection line cluster may be included, and a region of the endpoint is adjusted after another sensing data point is fused; or after the another sensing data point is fused, the projection plane (or the projection direction) may be further calculated, projection point clustering is obtained through projection, and a projection point range is adjusted to a minimum surrounding region of the new clustering.

The foregoing is described by using an example in which the projection plane is the XOY plane in the Cartesian coordinate system. It may be understood that the projection plane may alternatively be a YOZ plane, an XOZ plane, or another plane in the Cartesian coordinate system, that is, the projection direction (or the first direction) may alternatively be a direction perpendicular to the YOZ plane, the XOZ plane, or the another plane in the Cartesian coordinate system.

In some implementations, if the first communication apparatus and the second communication apparatus do not agree on the projection plane, or the second communication apparatus does not indicate the projection plane to the first communication apparatus, or the projection plane is not configured for the first communication apparatus and the second communication apparatus according to a protocol, the first communication apparatus may further report information about the projection plane to the second communication apparatus when the projection plane (or the projection direction) is determined by the first communication apparatus. For example, the first communication apparatus may extract any point on the projection plane as the origin O (*xₒ*, *yₒ*, *zₒ*), and determine a direction vector (*nₓ*, *n_{y}*) of two axes on the projection plane. The information about the projection plane may include the coordinates of the origin O and the direction vector {(*xₒ*, *yₒ*, *zₒ*), (*nₓ, n_{y}*)} of the two coordinate axes on the projection plane. For example, the projection plane is the XOY plane in the Cartesian coordinate system, and the foregoing two coordinate axes are: an X axis (a horizontal axis) and a Y axis (a vertical axis).

For example, the target object corresponds to m projection line clusters and k non-projection line clusters (which may also be referred to as other line clusters). In this embodiment of this application, the line cluster information may include line cluster information of the m projection line clusters and line cluster information of the k non-projection line clusters. The line cluster information of the projection line cluster may include coordinates (x, y) of the center point of the projection line cluster on the projection plane, the radius information (r) of the minimum surrounding circle of the projection region or the length and width information (h and w) of the bounding box, and a value of a distance between two ends of the line cluster and the projection plane: (*zₘᵢₙ, zₘₐₓ*). It may be understood that when r or (w, h) is 0, the line cluster has only one projection location on the projection plane, and the line cluster may include only one line (or line segment).

Coordinates of center points of the m projection line clusters on the projection plane may be sent in a form of {(*x*₁*, x*₂*,* ... , *xₘ*), (*y*₁, *y*₂, ... , *yₘ*)}. The coordinates of the center points of the m projection line clusters on the projection plane may be separately entropy encoded in each dimension, or may be encoded together. This is not limited in this application.

A sending form of the radius information (r) of the minimum surrounding circle of the m projection line clusters or the length and width information (h and w) of the bounding box may be {(*r*₁, *r*₂, ... , *rₘ*)}, or {(w₁, w₂, ..., wₘ), (h₁, h₂, ... , hₘ)}, or quantized data in the foregoing two forms.

Values (*zₘᵢₙ, zₘₐₓ*) of distances between the projection plane and two ends of the m projection line clusters may be sent in the following form: a form 1: {(z_{min _1}, z_{min _2}, ... , z_{min _m}), (z_{max _1}, z_{max _2}, ... , z_{max _m}) }; or a form 2: indexes may be recorded for clusters with same *zₘᵢₙ* and *zₘₐₓ*, and the indexes are extracted to be sent together. For example, indexes corresponding to each projection cluster are separately u₁, u₂, ... , uₘ. Corresponding *zₘᵢₙ* and *zₘₐₓ* are the same, and may be sent in a form of {index (u₁, u₂, ... , uₘ), (zₘᵢₙ, zₘₐₓ)}.

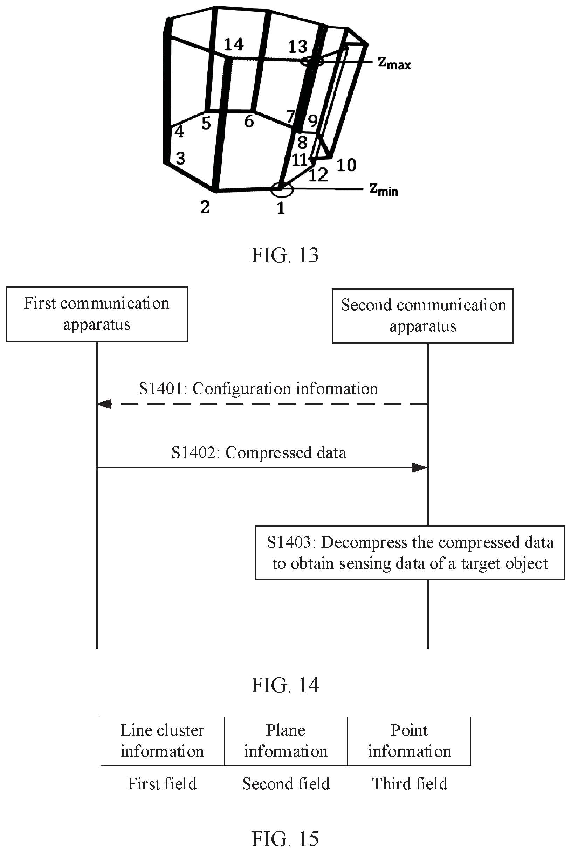

In addition, as shown in FIG. 13, indexes may be assigned to the two ends of the m projection line clusters in a specific sequence. For example, indexes of 2m endpoints may be assigned to the m projection line clusters in a clockwise sorting manner from the upper end to the lower end, or the indexes of the 2m endpoints may be assigned to the m projection line clusters in a clockwise sorting manner from the lower end to the upper end. In correspondence with the non-projection line cluster, the line cluster information of the non-projection line cluster may include indexes of endpoints at two ends of the non-projection line cluster.

For the k non-projection line clusters, indexes {(*v*_{1_1}, *v*_{1_2}), (*v*_{2_1}, *v*_{2_2}), ..., (*v*_{*k*_1}, *v*_{*k*_2})} of endpoints respectively corresponding to the k non-projection line clusters may be sent.

Certainly, the indexes may alternatively be assigned to the two ends of the m projection line clusters in a specific sequence. For example, indexes of m upper endpoints and indexes of m lower endpoints of the m projection line clusters may be assigned in the clockwise sorting manner. In the k non-projection line clusters, indexes, of endpoints, of non-projection line clusters corresponding to upper endpoints, and indexes, of endpoints, of non-projection line clusters corresponding to lower endpoints may be sent hierarchically. For example, a layer 1 sends a layer 1 of indexes: {(v_{1_1}, v_{1_2}), (v_{2_1}, v_{2_2})...}, of the k non-projection line clusters, that are of the endpoints and that are of the non-projection line clusters corresponding to the upper endpoints; and a layer 2 sends a layer 2 of indexes: {(w_{1_1,} w_{1_2}), (w_{2_1}, w_{2_2})...}, of the k non-projection line clusters, that are of the endpoints and that are of the non-projection line clusters corresponding to the lower endpoints.

In still another possible implementation, the first direction may further be the normal vectors of the sensing data points, and the first communication apparatus may perform clustering based on the normal vectors of the sensing data points, to obtain the line cluster information.

In an example, the first communication apparatus may cluster the sensing data points (for example, the sensing data points not on the plane) of the target object based on the normal vectors of the sensing data points, to obtain the at least one sensing data point cluster. Normal vectors of sensing data points in any sensing data point cluster are the same or similar. For the any sensing data point cluster, if a quantity of sensing data points included in the sensing data point clustering is greater than a specified threshold (for example, the second threshold), the first communication apparatus may determine that sensing data points in the sensing data point clustering are sensing data points in a line cluster, and may determine, based on the sensing data point clustering, line cluster information of the line cluster corresponding to the sensing data point clustering.

S403: The first communication apparatus sends data to the second communication apparatus, and correspondingly, the second communication apparatus receives the data.

In this embodiment of this application, the data sent by the first communication apparatus to the second communication apparatus may be data determined based on the line cluster information and/or the plane information of the target object, for example, data including the line cluster information and/or the plane information of the target object, or data obtained after the line cluster information and/or the plane information are/is processed in one or more of compression manners such as entropy coding and quantization compression.

In a possible implementation, the first communication apparatus may further determine the point information based on sensing data points that are of the target object and that are not on the plane and/or the line cluster, for example, compress, in a 2D projection compression manner or the KD tree compression manner, the sensing data points that are of the target object and that are not on the plane and/or the line cluster, to obtain the point information. The data sent by the first communication apparatus to the second communication apparatus may be further determined based on the point information, where for example, the data includes the point information.

S404: The second communication apparatus decompresses the received data to obtain the sensing data of the target object.

It may be understood that the sensing data (for example, a sensing data point set), of the target object, obtained by the second communication apparatus decompressing the received data is sensing data restored by the second communication apparatus based on the received data in which information about a limited quantity of sensing data points (for example, the location information, of the boundary sensing data points, corresponding to the plane information) and an algorithm (for example, a sampling algorithm) are recorded, instead of sensing data (for example, a sensing data point set), of the target object, obtained by the first communication apparatus in a manner such as scanning. Because only a limited amount of sensing data is transmitted, air interface overheads between the first communication apparatus and the second communication apparatus can be greatly reduced.

For example, the plane information may include three-dimensional coordinates of the boundary sensing data points respectively corresponding to the M planes. The second communication apparatus may restore boundary regions of the M planes based on the three-dimensional coordinates of the boundary sensing data points respectively corresponding to the M planes, and obtain, through sampling, sensing data points on the M planes in the boundary regions of the M planes.

For example, the line cluster information includes projection region information (for example, the two-dimensional coordinates of the center points and r) and the line length information (for example, *zₘᵢₙ, zₘₐₓ* ) of the m projection line clusters. The second communication apparatus may restore boundary regions of the m projection line clusters based on the line cluster information, and obtain, through sampling, sensing data points in the m projection line clusters in the boundary regions of the m projection line clusters.

In some implementations, the second communication apparatus may further send a compression configuration to the first communication apparatus, and the first communication apparatus may further generate and send compressed data based on the compression configuration.

FIG. 14 is a second sensing data transmission method according to this application. The method includes the following steps.

S1401: A second communication apparatus sends configuration information to a first communication apparatus, and correspondingly, the first communication apparatus receives the configuration information.

In this embodiment of this application, the configuration information may also be referred to as a compression configuration, and the configuration information may indicate one or more of a first threshold, a second threshold, a third threshold, a fourth threshold, or the like that is used to process a sensing data point.

It may be understood that one or more of the first threshold, the second threshold, the third threshold, the fourth threshold, or the like may be predefined by a communication system, predefined by a communication protocol, or preconfigured when the first communication apparatus and the second communication apparatus are delivered from a factory. If the second communication apparatus does not send the configuration information to the first communication apparatus, the first communication apparatus may process sensing data points of a target object based on the preconfigured or predefined first threshold, second threshold, third threshold, fourth threshold, or the like. Alternatively, if the second communication apparatus indicates only a part of thresholds (for example, the second threshold) based on the configuration information, the first communication apparatus may use preconfigured or predefined thresholds for a part of thresholds (for example, the second threshold) that are not indicated by the configuration information.

In some implementations, the configuration information may further indicate that compressed data (that is, data sent by the first communication apparatus to the second communication apparatus) is determined based on line cluster information, or determined based on plane information, or determined based on the line cluster information and the plane information. In other words, the configuration information may further indicate that the first communication apparatus sends the plane information, the line cluster information, the plane information and the line cluster information, or the like of the target object to the second communication apparatus.

In an example, the configuration information may include a level (level) field. When a value of the level is 1 (level 1), the first communication apparatus may perform compression based on points. For example, the first communication apparatus may directly determine point information based on all the sensing data points of the target object, and determine the compressed data based on the point information. Performing compression based on the points can implement high-precision transmission of the sensing data points of the target object.

When the value of the level is 2 (level 2), the first communication apparatus may perform compression based on the points and a plane. For example, the first communication apparatus may determine the plane information based on sensing data points on the plane, determine the point information based on sensing data points not on the plane, and obtain the compressed data based on the point information and the plane information. The compression based on the points and the plane can balance transmission performance and compression performance of the sensing data points.

When the value of the level is 3 (level 3), the first communication apparatus may perform compression based on the points, the plane, and a line. For example, the first communication apparatus may determine the plane information based on the sensing data points on the plane, determine the line cluster information based on sensing data points in the line cluster, determine the point information based on the sensing data points not on the plane and sensing data points not in the line cluster, and obtain the compressed data based on the plane information, the line cluster information, and the point information. The compression based on the points, the plane, and the line can achieve optimal compression.

When the value of the level is 4 (level 4), the first communication apparatus may perform compression based on the points and the line. For example, the first communication apparatus may determine the line cluster information based on the sensing data points in the line cluster, determine the point information based on the sensing data points not in the line cluster, and obtain the compressed data based on the line cluster information and the point information. The compression based on the points and the line can balance the transmission performance and the compression performance of the sensing data points.

In some implementations, the plane may alternatively be divided into a flat plane and a curved plane, and the compression configuration may alternatively indicate a more detailed determining manner for the compressed data. For example, the value of the level may alternatively be 5 (level 5). When the value of the level is 5 (level 5), the first communication apparatus may perform compression based on the points and the plane. For example, the first communication apparatus may determine the plane information based on sensing data points on the plane, determine the point information based on sensing data points not on the plane, and obtain the compressed data based on the point information and the plane information. The value of the level may alternatively be 6 (level 6). When the value of the level is 6 (level 6), the first communication apparatus may perform compression based on the points and the curved plane. For example, the first communication apparatus may determine the plane information based on sensing data points on the curved plane, determine the point information based on sensing data points not on the curved plane, and obtain the compressed data based on the point information and the plane information. The value of the level may alternatively be 7 (level 7), 8 (level 8), or the like. When the value of the level is 7 (level 7), the first communication apparatus may perform compression based on the points, the plane, and the line; when the value of the level is 8 (level 8), the first communication apparatus may perform compression based on the points, the curved plane, and the line; or the like.

In some implementations, the configuration information may further indicate quantization bit (or quantization step) information. The first communication apparatus may further quantize, based on the quantization bit information, one or more of three-dimensional coordinates, radius information (r) of the line cluster, length and width information (h and w) of the line cluster, or the like recorded by the sensing data points. During quantization, a quantity of quantized bits is positively correlated with quantization precision.

S1402: The first communication apparatus sends the compressed data to the second communication apparatus, and correspondingly, the second communication apparatus receives the compressed data.

For example, the first communication apparatus may process the obtained sensing data points of the target object, to obtain one or more of the line cluster information, the plane information, and the point information of the target object. Specifically, for an implementation in which the first communication apparatus processes the obtained sensing data points of the target object to obtain one or more of the line cluster information, the plane information, and the point information of the target object, refer to the implementation in FIG. 3. Details are not described again.

It may be understood that, if the second communication apparatus sends the configuration information to the first communication apparatus, a threshold (for example, the first threshold) used by the first communication apparatus to process the obtained sensing data points of the target object may be determined based on a threshold (for example, the first threshold) indicated by the configuration information. In addition, the first communication apparatus may alternatively determine, based on an indication (for example, a level) of the configuration information, how to process the obtained sensing data points of the target object.

As shown in FIG. 15, the compressed data may include one or more of a first field, a second field, and a third field. The first field may include compressed information corresponding to the line cluster information, for example, key sensing data point location information corresponding to the line cluster information, or the key sensing data point location information and line length information. The second field may include compressed information corresponding to the plane information, for example, key sensing data point location information corresponding to the plane information. The third field includes the point information of the target object. The point information may be obtained by compressing sensing data points, in the sensing data points of the target object, other than sensing data points corresponding to the line cluster information and/or the plane information.

S1403: The second communication apparatus decompresses the compressed data to obtain sensing data of the target object.

Specifically, for an implementation of S1403, refer to the implementation of S404. Details are not described again.

In some implementations, the second communication apparatus may further send indication information to the first communication apparatus, to indicate the first communication apparatus to filter/select the obtained sensing data (or sensing data points).

In a possible implementation, the second communication apparatus may send first indication information to the first communication apparatus. The first indication information indicates a target object set or a non-target object set, and the target object belongs to the target object set.

For example, the target object set may be a set of objects (or instances) required by the second communication apparatus. For example, the target object set may include a shopping mall, a house, a bridge, and the like. The non-target object set may be a set of objects (or instances) not required by the second communication apparatus. For example, the non-target object set may include a ground, a corridor, and the like. The first communication apparatus may process, based on the first indication information, only the sensing data points, required by the second communication apparatus, of the target object, and report the corresponding compressed data, to avoid unnecessary signaling and processing resource overheads.

In another possible design, the second communication apparatus may send second indication information to the first communication apparatus. The second indication information indicates one or more of a maximum cutoff height hₘₐₓ of the target object, a minimum cutoff height hₘᵢₙ of the target object, location information of a non-target line cluster, or location information of a non-target plane.

Non-target line cluster information may be location (or orientation) information of the non-target line cluster relative to the first communication apparatus, or location region information of the non-target line cluster in space. Non-target plane information may be location (or orientation) information of the non-target plane relative to the first communication apparatus, or location region information of the non-target plane in space. The first communication apparatus may exclude, based on the non-target line cluster information, line cluster information that is not required by the second communication apparatus and that is of a line cluster, exclude, based on the non-target plane information, plane information that is not required by the second communication apparatus and that is of a plane, exclude, based on the maximum cut-off height of the target object, a sensing data point that is not required by the second communication apparatus and that is above the maximum cut-off height of the target object, and exclude, based on the minimum cut-off height of the target object, a sensing data point that is not required by the second communication apparatus and that is below the minimum cut-off height of the target object.

In some implementations, the first communication apparatus may further filter out a plane or a line cluster that is excessively detailed or small and that corresponds to the target object, for example, filter out plane information of a plane or line cluster information of a line cluster whose quantity of sensing data points is less than a specified quantity threshold, to reduce signaling overheads of compressed data transmission.

According to the sensing data transmission method provided in this application, a transmitted data amount can be effectively reduced. The following solution is used as an example of a configuration 1 for simulation.

A draco solution is Kd tree compression with 8 to 16 quantization bits.

A projection (projection, Proj) solution is plane projection (plane projection) and an (Lempel-Ziv-Markov chain-Algorithm, LZMA) algorithm, for example, a 2D projection-based compression solution. Padding values of projection locations may be compressed according to the LZMA algorithm, and there are 4 to 9 quantization bits.

A compression manner 1 (ours1) of this solution is a plane and points. Plane information is determined based on sensing data points on the plane. For sensing data points not on the plane, a projection-based compression solution, for example, a 2D projection-based compression solution, is used, and there are 4 to 9 quantization bits.

A compression manner 2 (ours2) in this solution is a plane, a line, and points. Plane information is determined based on sensing data points on the plane, and line cluster information is determined based on sensing data points on the line cluster. For sensing data points that are not on the plane or the line cluster, a projection-based compression solution, for example, a 2D projection-based compression solution, is used, and there are 4 to 9 quantization bits.

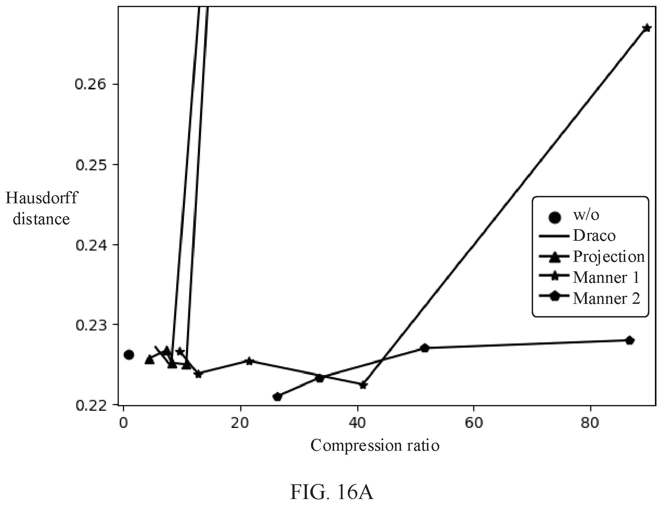

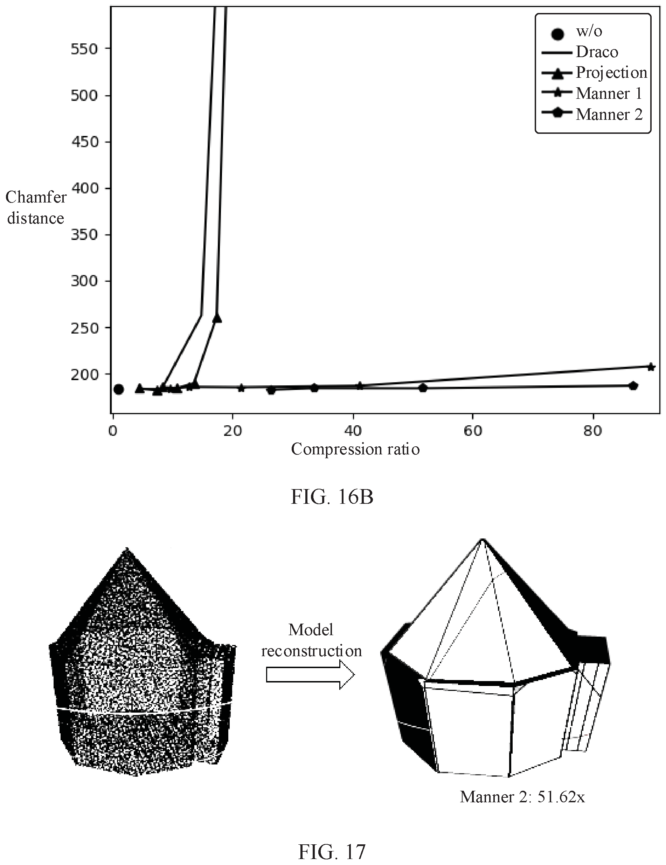

Refer to diagrams of simulation results in FIG. 16A and FIG. 16B. In FIG. 16A, a horizontal axis represents a compression ratio (compression ratio), and a vertical axis represents a Hausdorff distance (Hausdorff distance) corresponding to original sensing data points of a target object and sensing data points obtained through compression and restoration, where the Hausdorff distance may be referred to as H performance. In FIG. 16B, a horizontal axis represents a compression ratio (compression ratio), and a vertical axis represents a chamfer distance (chamfer distance) corresponding to original sensing data points of a target object and sensing data points obtained through compression and restoration. In addition, w/o in FIG. 16A and FIG. 16B represents a solution in which the sensing data points of the target object are directly transmitted, that is, a solution in which the compression ratio is 0. It can be learned from FIG. 16A, FIG. 16B, and a compression ratio of the compression manner 2 in this solution shown in FIG. 17 that, in this solution, when the H performance and chamfer distance performance remain basically unchanged, the compression ratio can be increased from about more than 10 times of the Draco solution and the Proj solution to more than 50 times.

The following solution is used as an example of a configuration 2 for simulation.

A draco solution is Kd tree compression with 4 to 9 quantization bits.

A projection (projection, Proj) solution is plane projection and an LZMA algorithm, for example, a 2D projection-based compression solution. Padding values of projection locations may be compressed according to the LZMA algorithm, and there are 3 to 8 quantization bits.

A compression manner 1 (ours1) of this solution is a plane and points. Plane information is determined based on sensing data points on the plane. For sensing data points not on the plane, a projection-based compression solution, for example, a 2D projection-based compression solution, is used, and there are 3 to 8 quantization bits.

A compression manner 2 (ours2) in this solution is a plane, a line, and points. Plane information is determined based on sensing data points on the plane, and line cluster information is determined based on sensing data points on the line cluster. For sensing data points that are not on the plane or the line cluster, a projection-based compression solution, for example, a 2D projection-based compression solution, is used, and there are 3 to 8 quantization bits.

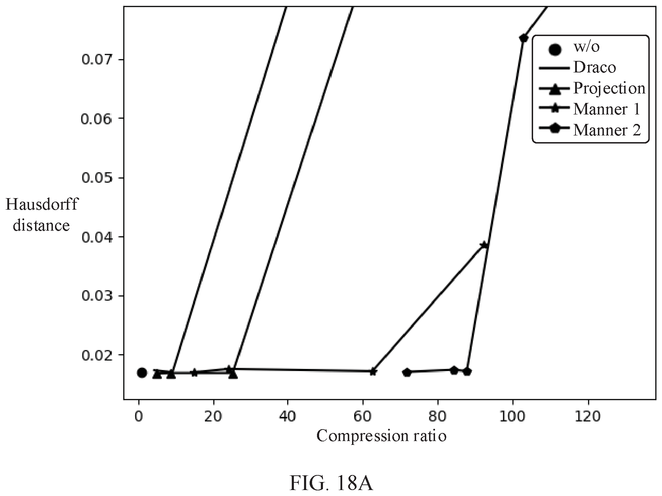

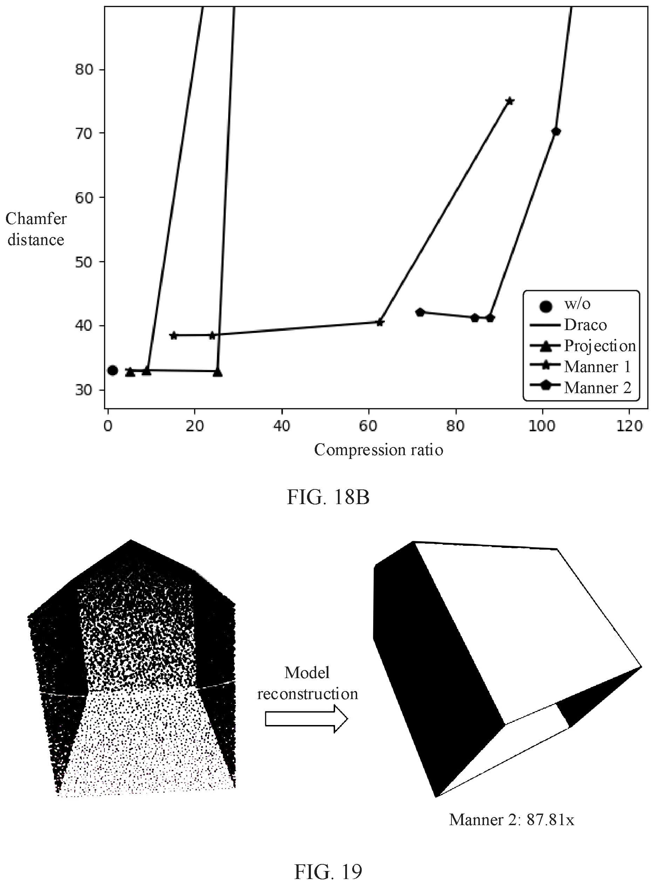

Refer to diagrams of simulation results in FIG. 18A and FIG. 18B. In FIG. 18A, a horizontal axis represents a compression ratio (compression ratio), and a vertical axis represents a Hausdorff distance (Hausdorff distance) corresponding to original sensing data points of a target object and sensing data points obtained through compression and restoration, where the Hausdorff distance may be referred to as H performance. In FIG. 18B, a horizontal axis represents a compression ratio (compression ratio), and a vertical axis represents a chamfer distance (chamfer distance) corresponding to original sensing data points of a target object and sensing data points obtained through compression and restoration. In addition, w/o in FIG. 18A and FIG. 18B represents a solution in which the sensing data points of the target object are directly transmitted, that is, a solution in which the compression ratio is 0. It can be learned from FIG. 18A, FIG. 18B, and a compression ratio of the compression manner 2 in this solution shown in FIG. 19 that, in this solution, when the H performance and chamfer distance performance remain basically unchanged, the compression ratio can be increased from about 25 times of the Draco solution and the Proj solution to more than 80 times.

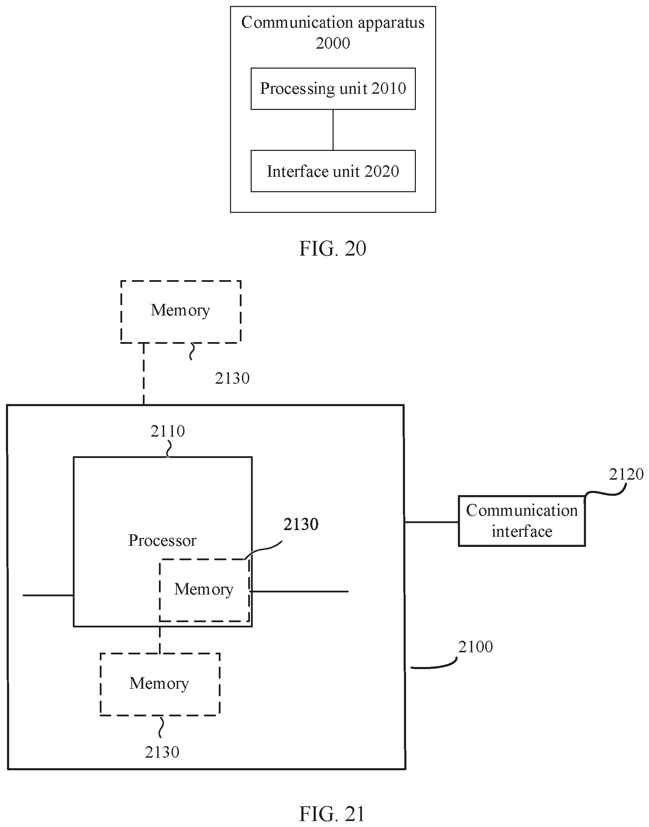

The following describes a communication apparatus provided in embodiments of this application. FIG. 20 is a diagram of a structure of a communication apparatus according to an embodiment of this application. The communication apparatus may include units or modules corresponding to a part or all of the steps in the foregoing method embodiments, and may be configured to perform the steps performed by the first communication apparatus or the second communication apparatus in the foregoing embodiments. For details, refer to related descriptions in the foregoing method embodiments.

As shown in FIG. 20, the communication apparatus 2000 includes a processing unit 2010 and an interface unit 2020. The processing unit 2010 may be a processor or a processing circuit, and the interface unit 2020 may further be a transceiver unit or an input/output interface. The communication apparatus 2000 may be configured to implement the steps performed by the first communication apparatus or the second communication apparatus in the foregoing embodiments.

When the communication apparatus 2000 is configured to implement the steps performed by the first communication apparatus in the foregoing embodiments,
a processing unit 2010 is configured to: obtain sensing data points of a target object; and perform data compression on the sensing data points of the target object, to obtain line cluster information and/or plane information of the target object. The plane information is determined based on each sensing data point and a neighboring sensing data point of each sensing data point, the line cluster information is determined based on a sensing data point corresponding to a first direction, and the sensing data point corresponding to the first direction is a sensing data point, in the sensing data points of the target object, other than the sensing data point corresponding to the plane information. The interface unit 2020 is configured to send data to the second communication apparatus. The data is determined based on the line cluster information and/or the plane information.

In a possible design, the sent data includes a first field and/or a second field. The first field includes endpoint location information of a line cluster corresponding to the line cluster information, or the endpoint location information of the line cluster and line length information of the line cluster. The second field includes boundary point location information of a plane corresponding to the plane information.

In a possible design, the sent data further includes a third field, the third field includes point information of the target object, and the point information is determined based on a sensing data point, in the sensing data points of the target object, other than a sensing data point corresponding to the line cluster information and/or the sensing data point corresponding to the plane information.

In a possible design, the plane information is determined based on a first threshold and a distance between each sensing data point and the neighboring sensing data point corresponding to each sensing data point.

In a possible design, the first direction is a projection direction of the sensing data point, and the line cluster information is determined based on a second threshold and a quantity of sensing data points corresponding to each projection location.

In a possible design, the interface unit 2020 is further configured to receive configuration information from the second communication apparatus. The configuration information indicates the first threshold and/or the second threshold.

In a possible design, the configuration information further indicates that the data is determined based on the line cluster information, or is determined based on the plane information, or is determined based on the line cluster information and the plane information.

In a possible design, the interface unit 2020 is further configured to receive first indication information from the second communication apparatus. The first indication information indicates a target object set or a non-target object set, and the target object belongs to the target object set.

In a possible design, the interface unit 2020 is further configured to receive second indication information from the second communication apparatus. The second indication information indicates one or more of a maximum cut-off height of the target object, a minimum cut-off height of the target object, location information of a non-target line cluster, or location information of a non-target plane. The sensing data point of the target object is a sensing data point that corresponds to and is below the maximum cut-off height of the target object, or the sensing data point of the target object is a sensing data point that corresponds to and is above the minimum cut-off height of the target object. The line cluster corresponding to the line cluster information is a line cluster, of the target object, other than the non-target line cluster, and the plane corresponding to the plane information is a plane, of the target object, other than the non-target plane.

In a possible design, when performing data compression on the sensing data points of the target object, to obtain the plane information of the target object, the processing unit 2010 is specifically configured to: cluster sensing data points of the target object on the plane, to obtain at least one plane sensing data point cluster, where a distance between each sensing data point on the plane and a neighboring sensing data point of each sensing data point is less than the first threshold; and determine the plane information based on the at least one plane sensing data point cluster.

In a possible design, when performing data compression on the sensing data points of the target object, to obtain the line cluster information of the target object, the processing unit 2010 is specifically configured to: determine projection locations of the sensing data points of the target object on a projection plane; for each projection location on the projection plane, when a quantity of sensing data points corresponding to the projection location is greater than the second threshold, determine the sensing data points corresponding to the projection location to be in a projection line cluster; cluster the sensing data points of the target object in the projection line cluster, to obtain at least one projection line cluster sensing data point cluster; and determine the line cluster information based on the at least one projection line cluster sensing data point cluster.

In a possible design, the processing unit 2010 is further configured to: determine distances between the sensing data points of the target object and the projection plane; and for each projection location on the projection plane, when the quantity of sensing data points corresponding to the projection location is greater than the second threshold, and a difference of distances between any two adjacent sensing data points corresponding to the projection location and the projection plane is less than a third threshold, determine the sensing data points corresponding to the projection location to be in the projection line cluster.

In a possible design, when determining the line cluster information based on the at least one projection line cluster sensing data point cluster, the processing unit 2010 is specifically configured to determine the line cluster information based on the at least one projection line cluster sensing data point cluster and at least one non-projection line cluster. The at least one non-projection line cluster is determined based on a plurality of endpoints corresponding to the at least one projection line cluster.

When the communication apparatus 2000 is configured to implement the steps performed by the second communication apparatus in the foregoing embodiments,
the interface unit 2020 is configured to receive data from a first communication apparatus. The data is determined based on line cluster information and/or plane information of a target object, the plane information is determined based on a sensing data point of the target object and a neighboring sensing data point corresponding to the sensing data point, the line cluster information is determined based on a sensing data point corresponding to a first direction, and the sensing data point corresponding to the first direction is a sensing data point, in sensing data points of the target object, other than the sensing data point corresponding to the plane information. The processing unit 2010 is configured to decompress the received data to obtain sensing data of the target object.

In a possible design, the received data includes a first field and/or a second field. The first field includes endpoint location information of a line cluster corresponding to the line cluster information, or the endpoint location information of the line cluster and line length information of the line cluster. The second field includes boundary point location information of a plane corresponding to the plane information.

In a possible design, the received data further includes a third field, the third field includes point information of the target object, and the point information is determined based on a sensing data point, in the sensing data points of the target object, other than the sensing data point corresponding to the line cluster information and/or the sensing data point corresponding to the plane information.

In a possible design, the plane information is determined based on a first threshold and a distance between the sensing data point and the neighboring sensing data point corresponding to the sensing data point.

In a possible design, the first direction is a projection direction of the sensing data point, and the line cluster information is determined based on a second threshold and a quantity of sensing data points corresponding to each projection location.

In a possible design, the interface unit 2020 is further configured to send configuration information to the first communication apparatus. The configuration information indicates the first threshold and/or the second threshold.

In a possible design, the configuration information further indicates that the data is determined based on the line cluster information, or is determined based on the plane information, or is determined based on the line cluster information and the plane information.

In a possible design, the interface unit 2020 is further configured to send first indication information to the first communication apparatus. The first indication information indicates a target object set or a non-target object set, and the target object belongs to the target object set.

In a possible design, the interface unit 2020 is further configured to send second indication information to the first communication apparatus. The second indication information indicates one or more of a maximum cut-off height of the target object, a minimum cut-off height of the target object, location information of a non-target line cluster, or location information of a non-target plane. The sensing data point of the target object is a sensing data point that corresponds to and is below the maximum cut-off height of the target object, or the sensing data point of the target object is a sensing data point that corresponds to and is above the minimum cut-off height of the target object. The line cluster corresponding to the line cluster information is a line cluster, of the target object, other than the non-target line cluster, and the plane corresponding to the plane information is a plane, of the target object, other than the non-target plane.

As shown in FIG. 21, this application further provides a communication apparatus 2100, including a processor 2110 and further including a communication interface 2120. The processor 2110 and the communication interface 2120 are coupled to each other. It may be understood that the communication interface 2120 may be a transceiver, an input/output interface, an input interface, an output interface, an interface circuit, or the like. Optionally, the communication apparatus 2100 may further include a memory 2130, configured to: store instructions executed by the processor 2110, or store input data required for running the instructions by the processor 2110, or store data generated after the processor 2110 runs the instructions. The memory 2130 may be a physically independent unit coupled to the processor 2110, or the processor 2110 is integrated with the memory 2130.

When the communication apparatus 2100 is configured to implement the steps performed by the first communication apparatus and the second communication apparatus in the foregoing embodiments, the processor 2110 may be configured to implement a function of the processing unit 2010, and the communication interface 2120 may be configured to implement a function of the interface unit 2020.

It should be noted that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a logic circuit, a field programmable gate array (field programmable gate array, FPGA), or another programmable logic device, a transistor logic device, a hardware component, or any combination thereof. The general purpose processor may be a microprocessor or any conventional processor or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be in a network device or a terminal device. Certainly, the processor and the storage medium may alternatively exist as discrete components in a network device or a terminal device.

A part or all of the foregoing embodiments may be implemented by using software, hardware, firmware, or any combination thereof. When software is used to implement embodiments, a part or all of embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, user equipment, or another programmable apparatus. The computer program or instructions may be stored in a computer-readable storage medium, or transmitted from one computer-readable storage medium to another computer-readable storage medium. For example, the computer program or instructions may be transmitted from one network device, terminal, computer, server, or data center to another network device, terminal, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions of different embodiments are consistent and may be mutually referenced, and technical features in different embodiments may be combined based on an internal logical relationship thereof to form a new embodiment.

In addition, it should be understood that the term "for example" in embodiments of this application is used to represent giving an example, an illustration, or a description. Any embodiment or design scheme described as an "example" in this application should not be explained as being more preferred or having more advantages than another embodiment or design scheme. Exactly, the term "example" is for presenting a concept in a specific manner.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A sensing data transmission method, applied to a first communication apparatus, comprising:
obtaining sensing data points of a target object;
performing data compression on the sensing data points of the target object, to obtain line cluster information and/or plane information of the target object, wherein the plane information is determined based on the sensing data point and a neighboring sensing data point corresponding to the sensing data point, the line cluster information is determined based on a sensing data point corresponding to a first direction, and the sensing data point corresponding to the first direction is a sensing data point, in the sensing data points of the target object, other than the sensing data point corresponding to the plane information; and
sending data to a second communication apparatus, wherein the data is determined based on the line cluster information and/or the plane information.

2. The method according to claim 1, wherein the data comprises a first field and/or a second field;
the first field comprises endpoint location information of a line cluster corresponding to the line cluster information, or the endpoint location information of the line cluster and line length information of the line cluster; and
the second field comprises boundary point location information and/or plane parameter information of a plane corresponding to the plane information.

3. The method according to claim 2, wherein the data further comprises a third field, the third field comprises point information of the target object, and the point information is determined based on a sensing data point, in the sensing data points of the target object, other than a sensing data point corresponding to the line cluster information and/or the sensing data point corresponding to the plane information.

4. The method according to any one of claims 1 to 3, wherein the plane information is determined based on a first threshold and a distance between the sensing data point and the neighboring sensing data point corresponding to the sensing data point; and/or
the first direction is a projection direction of the sensing data point, and the line cluster information is determined based on a second threshold and a quantity of sensing data points corresponding to each projection location.

5. The method according to claim 4, wherein the method further comprises:
receiving configuration information from the second communication apparatus, wherein the configuration information indicates the first threshold and/or the second threshold.

6. The method according to claim 5, wherein the configuration information further indicates that the data is determined based on the line cluster information, or is determined based on the plane information, or is determined based on the line cluster information and the plane information.

7. The method according to any one of claims 1 to 6, wherein the method further comprises:
receiving first indication information from the second communication apparatus, wherein the first indication information indicates a target object set or a non-target object set, and the target object belongs to the target object set.

8. The method according to any one of claims 1 to 7, wherein the method further comprises:
receiving second indication information from the second communication apparatus, wherein the second indication information indicates one or more of a maximum cut-off height of the target object, a minimum cut-off height of the target object, location information of a non-target line cluster, or location information of a non-target plane; the sensing data point of the target object is a sensing data point that corresponds to and is below the maximum cut-off height of the target object, or the sensing data point of the target object is a sensing data point that corresponds to and is above the minimum cut-off height of the target object; and the line cluster corresponding to the line cluster information is a line cluster, of the target object, other than the non-target line cluster, and the plane corresponding to the plane information is a plane, of the target object, other than the non-target plane.

9. The method according to claim 4, wherein performing data compression on the sensing data points of the target object, to obtain the plane information of the target object comprises:
clustering sensing data points of the target object on the plane, to obtain at least one plane sensing data point cluster, wherein a distance between each sensing data point on the plane and a neighboring sensing data point corresponding to each sensing data point is less than the first threshold; and
determining the plane information based on the at least one plane sensing data point cluster.

10. The method according to claim 4 or 9, wherein performing data compression on the sensing data points of the target object, to obtain the line cluster information of the target object comprises:
determining projection locations of the sensing data points of the target object on a projection plane;
for each projection location on the projection plane, when a quantity of sensing data points corresponding to the projection location is greater than the second threshold, determining the sensing data points corresponding to the projection location to be in a projection line cluster;
clustering the sensing data points of the target object in the projection line cluster, to obtain at least one projection line cluster sensing data point cluster; and
determining the line cluster information based on the at least one projection line cluster sensing data point cluster.

11. The method according to claim 10, wherein the method further comprises: determining distances between the sensing data points of the target object and the projection plane; and
for each projection location on the projection plane, when the quantity of sensing data points corresponding to the projection location is greater than the second threshold, determining the sensing data points corresponding to the projection location to be in the projection line cluster comprises:
for each projection location on the projection plane, when the quantity of sensing data points corresponding to the projection location is greater than the second threshold, and a difference of distances between any two adjacent sensing data points corresponding to the projection location and the projection plane is less than a third threshold, determining the sensing data points corresponding to the projection location to be in the projection line cluster.

12. The method according to claim 10 or 11, wherein the determining the line cluster information based on the at least one projection line cluster comprises:
determining the line cluster information based on the at least one projection line cluster sensing data point cluster and at least one non-projection line cluster, wherein the at least one non-projection line cluster is determined based on a plurality of endpoints corresponding to the at least one projection line cluster and/or a boundary point of the target object.

13. A sensing data transmission method, applied to a second communication apparatus, comprising:
receiving data from a first communication apparatus, wherein the data is determined based on line cluster information and/or plane information of a target object, the plane information is determined based on a sensing data point of the target object and a neighboring sensing data point corresponding to the sensing data point, the line cluster information is determined based on a sensing data point corresponding to a first direction, and the sensing data point corresponding to the first direction is a sensing data point, in sensing data points of the target object, other than the sensing data point corresponding to the plane information; and
decompressing the data to obtain sensing data of the target object.

14. The method according to claim 13, wherein the data comprises a first field and/or a second field;
the first field comprises endpoint location information of a line cluster corresponding to the line cluster information, or the endpoint location information of the line cluster and line length information of the line cluster; and
the second field comprises boundary point location information and/or plane parameter information of a plane corresponding to the plane information.

15. The method according to claim 14, wherein the data further comprises a third field, the third field comprises point information of the target object, and the point information is determined based on a sensing data point, in the sensing data points of the target object, other than a sensing data point corresponding to the line cluster information and/or the sensing data point corresponding to the plane information.

16. The method according to any one of claims 13 to 15, wherein the plane information is determined based on a first threshold and a distance between the sensing data point and the neighboring sensing data point corresponding to the sensing data point; and/or
the first direction is a projection direction of the sensing data point, and the line cluster information is determined based on a second threshold and a quantity of sensing data points corresponding to each projection location.

17. The method according to claim 16, wherein the method further comprises:
sending configuration information to the first communication apparatus, wherein the configuration information indicates the first threshold and/or the second threshold.

18. The method according to claim 17, wherein the configuration information further indicates that the data is determined based on the line cluster information, or is determined based on the plane information, or is determined based on the line cluster information and the plane information.

19. The method according to any one of claims 13 to 18, wherein the method further comprises:
sending first indication information to the first communication apparatus, wherein the first indication information indicates a target object set or a non-target object set, and the target object belongs to the target object set.

20. The method according to any one of claims 13 to 19, wherein the method further comprises:
sending second indication information to the first communication apparatus, wherein the second indication information indicates one or more of a maximum cut-off height of the target object, a minimum cut-off height of the target object, location information of a non-target line cluster, or location information of a non-target plane; the sensing data point of the target object is a sensing data point that corresponds to and is below the maximum cut-off height of the target object, or the sensing data point of the target object is a sensing data point that corresponds to and is above the minimum cut-off height of the target object; and the line cluster corresponding to the line cluster information is a line cluster, of the target object, other than the non-target line cluster, and the plane corresponding to the plane information is a plane, of the target object, other than the non-target plane.

21. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 20 by using a logic circuit or executing instructions.

22. A computer program product, comprising a computer program or instructions, wherein when the computer program or the instructions are executed by a processor, the method according to any one of claims 1 to 20 is implemented.

23. A chip system, wherein the chip system comprises a processor, the processor is configured to be coupled to a memory, the memory is configured to store a computer program or instructions, and when the computer program or the instructions are executed by the processor, the method according to any one of claims 1 to 20 is implemented.

24. A computer-readable storage medium, wherein the storage medium stores a computer program or instructions, and when the computer program or the instructions are executed by a processor, the method according to any one of claims 1 to 20 is implemented.
